(19) Europäisches Patentamt
European Patent Office
Office européen des brevets

(11) **EP 4 049 461 B1**

(12) **EUROPÄISCHE PATENTSCHRIFT**

(45) Veröffentlichungstag und Bekanntmachung des Hinweises auf die Patenterteilung:
**22.11.2023   Patentblatt 2023/47**

(21) Anmeldenummer: **20797085.6**

(22) Anmeldetag: **22.10.2020**

(51) Internationale Patentklassifikation (IPC):
***H04R 3/00*** *(2006.01)*

(52) Gemeinsame Patentklassifikation (CPC):
**H04R 3/007**

(86) Internationale Anmeldenummer:
**PCT/EP2020/079813**

(87) Internationale Veröffentlichungsnummer:
**WO 2021/078895 (29.04.2021 Gazette 2021/17)**

(54) **VERFAHREN UND VORRICHTUNG ZUR MODIFIZIERUNG EINES LAUTSPRECHERSIGNALS ZUR VERMEIDUNG EINER MEMBRANÜBERAUSLENKUNG**

METHOD AND DEVICE FOR MODIFYING A LOUDSPEAKER SIGNAL TO PREVENT AN EXCESSIVE MEMBRANE EXCURSION

DISPOSITIF ET PROCÉDÉ PERMETTANT DE MODIFIER UN SIGNAL DE HAUT-PARLEUR POUR EMPÊCHER UNE DÉVIATION EXCESSIVE DE LA MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2019   DE 102019216504**

(43) Veröffentlichungstag der Anmeldung:
**31.08.2022   Patentblatt 2022/35**

(73) Patentinhaber: **Fraunhofer-Gesellschaft zur Förderung
der angewandten Forschung e.V.
80686 München (DE)**

(72) Erfinder:
• **RITTER, Robin**
  **98693 Ilmenau (DE)**
• **FISCHER, Georg**
  **98693 Ilmenau (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**EP-A1- 3 818 727     GB-A- 2 539 725**

EP 4 049 461 B1

**Beschreibung**

**Technisches Gebiet**

Ausführungsbeispiele gemäß der Erfindung beziehen sich auf eine Vorrichtung und ein Verfahren zur Modifizierung eines Lautsprechersignals zur Vermeidung einer Membranüberauslenkung. In anderen Worten kann es sich dabei beispielsweise um einen Auslenkungslimiter handeln.

**Technisches Problem**

Grundproblem: Lautsprecher (unabhängig vom Aktorprinzip) können durch zu starke mechanische Belastung beschädigt oder zerstört werden. Dies geschieht im Allgemeinen beim Anlegen einer hohen Eingangsspannung, die in einer zu starken Auslenkung der mechanischen Komponenten des Schallwandlers (Membran, Aufhängung, ...) resultiert.

Allgemeiner Lösungsansatz: Die Membranauslenkung wird durch ein gesteuertes Verringern der Eingangsspannung am Lautsprecher begrenzt.

Probleme bei einfacher Lösung: Simple Begrenzer führen zu schlechter Klangqualität und können den mechanischen Schutz des Wandlers nicht garantieren, bzw. benötigen übermäßig viel Headroom, was die Leistungsfähigkeit des Wandlers nicht voll ausnutzt.

In Anbetracht dessen besteht ein Bedarf nach einem Konzept, das einen besseren Kompromiss zwischen einer Verbesserung der Klangqualität, hoher Leistungsfähigkeit des Wandlers und gutem mechanischen Schutz des Wandlers ermöglicht.

Diese Aufgabe wird durch den Gegenstand der unabhängigen Patentansprüche gelöst.

Erfindungsgemäße Weiterbildungen sind in den Unteransprüchen definiert.

**Hintergrund der Erfindung**

Patente US4113983A, US4327250A und US5481617A: In diesen Erfindungen werden Hochpass-Filter mit variabler Grenzfrequenz beschrieben, welche auf Basis eines Auslenkungsmodells die tieffrequenten Anteile aus dem Eingangssignal herausfiltern. Das Eingangssignal durchläuft ein Hochpass-Filter, dessen Grenzfrequenz zu Beginn sehr niedrig ist (z.B. 20 Hz). Anschließend wird das Signal gesplittet und gelangt einerseits zum Verstärker und weiter zum Lautsprecher. Andererseits gelangt es über eine Feedback-Schleife in ein Modell zur Prädiktion der Membranauslenkung. Daraufhin prüft ein Controller, ob die Amplitude des prädizierten Signales oberhalb des festgelegten Grenzwertes liegt. Ist dies der Fall, so wird die Grenzfrequenz des Hochpass-Filters nach oben korrigiert. Ein Nachteil des Filterdesigns ist, dass dem Signal Frequenzanteile entzogen werden können, die für die Membranauslenkung unerheblich sind. Dies bewirkt eine unnötige Verschlechterung der Klangqualität. Eine weitere Schwierigkeit stellt die Reaktionszeit der einzelnen Blöcke dar. Da kein Delay-Element existiert, muss eine gewisse Sicherheitszone zur tatsächlichen maximalen Auslenkungsgrenze eingehalten werden, da das Signal immer mindestens einen Feedbackdurchlauf benötigt, ehe der Schutzmechanismus aktiv wird. Somit können impulsartige Signalanteile nur schwer korrigiert werden. Diese zusätzliche Sicherheitszone verringert den maximalen Schalldruckpegel des Systems.

US20180014121A1: Das Eingangssignal wird gesplittet und gelangt zum einen in ein Delay-Element, woraufhin es durch eine Filterbank in einzelne Frequenzbänder zerlegt wird. Diesen Frequenzbändern werden individuelle Dämpfungsfaktoren hinzugefügt. Zum anderen wird das eingehende Signal per Modell in ein Auslenkungssignal umgerechnet welches anschließend, wie im ersten Signalpfad, in einzelne Frequenzbänder mit individuellen Dämpfungsfaktoren zerlegt wird. Die Dämpfungsfaktoren aus beiden Pfaden sind identisch. Ein Overexcursion Detector prüft, ob das Auslenkungssignal den festgelegten Grenzwert überschreitet. Ist dies der Fall, wird der Gain Calculator aktiviert, welcher neue Dämpfungsfaktoren zur Verringerung der Auslenkung berechnet. Der Gain Update Block, der für die Aktualisierung der Dämpfungsfaktoren im Spannungs-Signalpfad zuständig ist, arbeitet unter Berücksichtigung von Attack-, Hold und Release Zeiten. Zur Berechnung der Dämpfungsfaktoren kommt eine Normalised Least Mean Squares (NLMS) Optimierung zum Einsatz.

A MODEL BASED EXCURSION PROTECTION ALGORITHM FOR LOUDSPEAKERS,

Chenchi (Eric) Luo, James McClellan, Milind Borkar, Arthur Redfern: Zu Beginn wird auf Basis des n-ten Spannungssamples sowie eines nichtlinearen Lautsprechermodells die Auslenkung für das n+1-te Sample prädiziert. Im Falle einer zu großen Membranauslenkung wird dieses Auslenkungssample vom Kompressor korrigiert und anschließend mit Hilfe eines inversen Lautsprechermodells in ein Spannungssample zurückgerechnet. Mit dieser Methode sollen zu hohe Membranauslenkungen besser lokalisiert und somit gezielter korrigiert werden. Der Kompressor bietet die Option für verschiedene Kompressionsverhältnisse sowie die Möglichkeit für Soft-Knee/Hard-Knee, um die Intensität des Effekts besser zu kontrollieren.

US8855322B2 zeigt einen Multiband-Limiter (Frequenzbänder an Frequenzgruppen des Gehörs orientiert) mit psychoakustischem Modell zur Lautheitsmaximierung und linearem Auslenkungsmodell (Übertragungsfunktion).

US9807502BA zeigt einen Lautsprechercontroller inkl. Auslenkungslimiter, Temperaturlimiter und Leistungsreduktion mit psychoakustischem Modell.

GB2539725 offenbart ein Lautsprecherschutzsystem. Ein Auslenkungsprädiktor empfängt eine Version eines Audiosignals aus dem Signalweg stromaufwärts eines Verzögerungsblocks und sagt eine Auslenkung oder Verschiebung für einen Lautsprecher auf der Grundlage des Audiosignals voraus. Ein Verstärkungsregler steuert eine Verstärkungseinstellung g des Verstärkungsblocks in Abhängigkeit von der vorhergesagten Auslenkung und einem ersten Lautsprecher-Impulsantwortmodell sowie einer vorgegebenen Auslenkungsgrenze. Der Verstärkungsregler bestimmt mindestens eine Verstärkungseinstellung g, die auf einen Satz von Abtastwerten des durch den Verzögerungsblock verzögerten Audiosignals anzuwenden ist.

## Zusammenfassung der Erfindung

Die hier vorgestellten Ausführungsbeispiele betreffen ein Konzept zur Modifizierung eines Lautsprechersignals zur Vermeidung einer Membranüberauslenkung. Blockweise, in überlappenden Zeitblöcken, wird auf Basis des Lautsprechersignals ein Membranauslenkungssignal prädiziert, um so pro Zeitblock einen Membranauslenkungssignalblock zu erhalten. Somit kann, z. B. bevor das Lautsprechersignal an einen Lautsprecher geschickt wird, aus dem Lautsprechersignal auf eine Membranauslenkung, verursacht z. B. durch das Lautsprechersignal an einer Membran des Lautsprechers, geschlossen werden. Gemäß einem Ausführungsbeispiel wird eine zeitliche Auswerteposition bestimmt, an der dann unter Berücksichtigung eines Vergleichs des aktuellen Membranauslenkungssignalblocks mit einem nachfolgenden Membranauslenkungssignalblock oder einer Schätzung des nachfolgenden Membranauslenkungssignalblocks aus dem aktuellen Membranauslenkungssignalblock an der zeitlichen Position einen Dämpfungsfaktor zu berechnen, mit dessen Anwendung ein modifizierter aktueller Membranauslenkungssignalblock erhalten wird und dann ein modifiziertes Lautsprechersignal auf Basis des modifizierten aktuellen Membranauslenkungssignalblocks synthetisiert wird. Die Auswertezeitpunktbestimmung wird durch Zuführen des aktuellen Membranauslenkungssignalblocks oder des Lautsprechersignals in dem aktuellen Zeitblock einer Inferenz durch ein Auswertungszeitposition-Inferenz-Machine-Learning-Modell bestimmt, wobei das Modell entsprechend so trainiert worden ist, dass anschließend die dort ermittelte Dämpfung optimal ist, wie z.B. optimal im Sinne einer gemäß dem menschlichen Hörvermögen qualitativ möglichst guten und möglichst lauten Reproduktion des dem synthetisierten Lautsprechersignals entsprechenden Audiosignals bei Vermeidung einer Membranüberauslenkung.

Gemäß einem alternativen Ausführungsbeispiel wird durch Zuführen des aktuellen Membranauslenkungssignalblocks oder des Lautsprechersignals in dem aktuellen Zeitblock einer Inferenz durch ein Machine-Learning-Modell der Dämpfungsfaktor direkt bestimmt. Dieses Dämpfung-Inferenz-Machine-Learning-Modell wird beispielsweise so trainiert, dass die ermittelte Dämpfung optimal ist, wie z.B. optimal im Sinne einer gemäß dem menschlichen Hörvermögen qualitativ möglichst guten und möglichst lauten Reproduktion des dem synthetisierten Lautsprechersignals entsprechenden Audiosignals bei Vermeidung einer Membranüberauslenkung.

Die soeben vorgestellten Ausführungsbeispiele vereinfachen ein Vergleichsbeispiel, wonach zunächst eine zeitliche Position einer maximalen Auslenkung eines aktuellen Membranauslenkungssignalblocks eines aktuellen Zeitblocks innerhalb eines Überlappbereichs mit einem nachfolgenden Zeitblock ermitteln wird, um dann für den aktuellen Zeitblock unter Berücksichtigung eines Vergleichs des aktuellen Membranauslenkungssignalblocks mit einem nachfolgenden Membranauslenkungssignalblock oder einer Schätzung des nachfolgenden Membranauslenkungssignalblocks aus dem aktuellen Membranauslenkungssignalblock an dieser zeitlichen Position einen Pegel zu berechnen, bis zu welchem der aktuelle Membranauslenkungssignalblock ohne Membranüberauslenkung aussteuerbar ist, und den aktuellen Membranauslenkungssignalblock auf Basis des Pegels zu dämpfen. Auch bei den Ausführungsbeispielen der vorliegenden Erfindung wird das Membranauslenkungssignal des aktuellen Zeitblocks weder nicht zu wenig, noch zu stark, unter Berücksichtigung des Überlapps mit dem nachfolgenden Membranauslenkungssignalblock, gedämpft, wodurch eine hohe Klangqualität erreicht werden kann. Durch die Dämpfung überlappender Membranauslenkungssignalblöcke auf diese Weise resultieren diese durch ein Overlap-add (z. B. eine segmentierte Faltung von modifizierten Membranauslenkungssignalblöcken aufeinanderfolgender Zeitblöcke) in einem Membranauslenkungssignal, das eine Auslenkungsamplitude geringer als die Membranüberauslenkung aufweisen sollte, sodass ein mechanischer Schutz gewährleistet sein sollte. Der Pegel, bis zu dem der Membranauslenkungssignalblock ausgesteuert werden kann, um den aktuellen Membranauslenkungssignalblock im Vergleich zu dem nachfolgenden Membranauslenkungssignalblock in einem optimierten Verhältnis zu dämpfen, muss nicht notwendiger Weise explizit aufwändig bestimmt werden. Der Pegel kann an der durch das ML (Machine-Learning) Modell bestimmten zeitlichen Position bestimmt werden, wie zum Beispiel so, dass der aktuelle Membranauslenkungssignalblock so gedämpft wird, dass zu dieser zeitlichen Position z. B. nach dem Overlap-add, eine maximale Membranauslenkungsamplitude erreicht werden kann. Somit kann der modifizierte aktuelle Membranauslenkungssignalblock erhalten werden, der sicherstellen kann, dass das daraus synthetisierte Lautsprechersignal z. B. die Membran des Lautsprechers, an den das synthetisierte Lautsprechersignal übertragen werden kann, nicht durch eine Membranüberauslenkung beschädigt und der Lautsprecher bei hoher Leistungsfähigkeit betrieben werden kann, also z. B unter Ausnutzung der komplett möglichen Auslenkung der Membran (z. B. bis zu der maximalen Membranauslenkungsamplitude) ohne Membranüberauslenkung.

Somit ist festzuhalten, dass die Vorrichtung durch das synthetisierte Lautsprechersignal eine hohe Klangqualität bei gutem mechanischen Schutz und hoher Leistungsfähigkeit bereitstellen kann.

Gemäß einem Ausführungsbeispiel kann es vorgesehen sein, um zur Berechnung des Pegels einen Quotienten zwischen dem aktuellen Membranauslenkungssignalblock an der zeitlichen Position einerseits und einer Summe des nachfolgenden Membranauslenkungssignalblocks oder der Schätzung des nachfolgenden Membranauslenkungssignalblocks an der zeitlichen Position und dem aktuellen Membranauslenkungssignalblock an der zeitlichen Position andererseits zu bestimmen.

Gemäß einem Ausführungsbeispiel kann es vorgesehen sein, den aktuellen Membranauslenkungssignalblock in Frequenzbandsignalzeitblöcke zerlegt zu verarbeiten. Auf diese Weise ist es möglich, die Dämpfung der menschlichen Hörschwelle angepasst vorzunehmen, um bei Verhinderung der Membranüberauslenkung und Beibehaltung der hörbaren Klangqualität eine höhere Lautstärke zu erzielen.

**Figurenkurzbeschreibung**

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:

Fig. 1                 eine schematische Darstellung einer Vorrichtung gemäß einem Vergleichsbeispiel;

Fig. 2a und 2b    zeigen eine schematische Darstellung einer Vorrichtung gemäß einem Ausführungsbeispiel mit ML-basierter Auswertezeitpunktbestimmung und ein Blockdiagram eines Gesamtsignalflusses gemäß einer Implementierung dieser Vorrichtung;

Fig. 2c und 2d    zeigen eine schematische Darstellung einer Vorrichtung gemäß einem Ausführungsbeispiel mit unmittelbarer ML-basierter Dämpfungsfaktorbestimmung und ein Blockdiagram eines Gesamtsignalflusses gemäß einer Implementierung dieser Vorrichtung;

Fig. 3                 ein Blockdiagram eines Gesamtsignalflusses gemäß einer Implementierung der Vorrichtung von Fig. 1;

Fig. 4                 ein Blockdiagram einer Signalanalyse von Fig. 3;

Fig. 5a-c          Blockdiagrame für einer Berechnung eines zweiten maximalen Auslenkungsanteils, und zwar bei Fig. 5a unter Hinzuziehung des nachfolgenden Membranauslenkungssignalblocks, bei Fig. 5b unter Schätzung des nachfolgenden Membranauslenkungssignalblocks und bei Fig. 5c unter Schätzung des zweiten maximalen Auslenkungsanteils;

Fig. 6                 ein Blockdiagram einer exemplarischen Anwendung von Dämpfungsfaktoren, hier exemplarisch als Anwendung von frequenzabhängigen Dämpfungsfaktoren auf den Membranauslenkungssignalblock.

**Detaillierte Beschreibung der Ausführungsbeispiele gemäß den Figuren**

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

Die Beschreibung beginnt mit der Darstellung eines Vergleichsbeispiels.

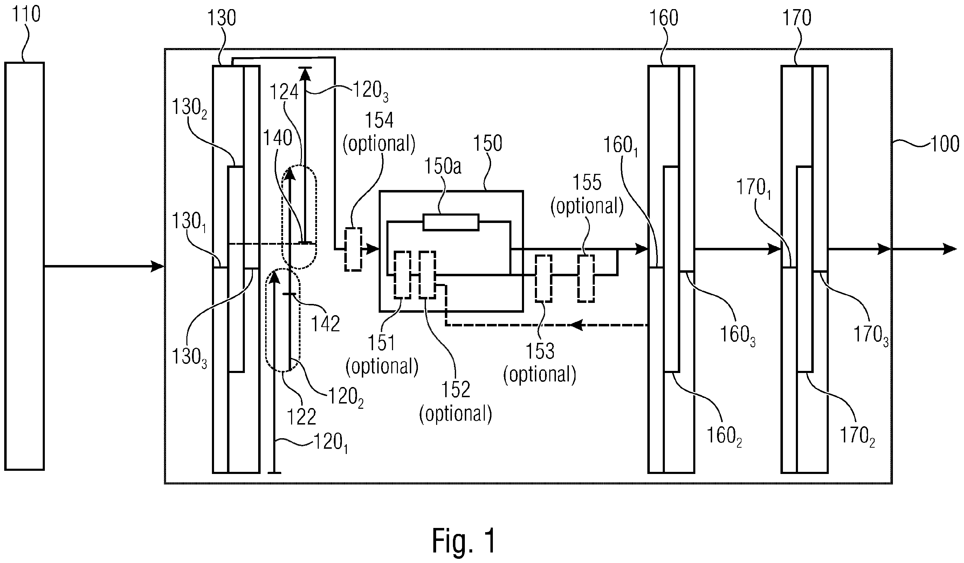

Fig. 1 zeigt eine schematische Darstellung einer Vorrichtung 100 zur Modifizierung eines Lautsprechersignals 110 zur Vermeidung einer Membranüberauslenkung. Die Vorrichtung 100 kann konfiguriert sein, um blockweise in überlappenden Zeitblöcken $120_1$ bis $120_3$, auf Basis des Lautsprechersignals 110 ein Membranauslenkungssignal 130 zu prädizieren, um pro Zeitblock $120_1$ bis $120_3$ einen Membranauslenkungssignalblock $130_1$ bis $130_3$ zu erhalten. Gemäß Fig. 1 kann beispielsweise die Vorrichtung 100 drei Membranauslenkungssignalblöcke 130, bis $130_3$ zu drei Zeitblöcken $120_1$ bis $120_3$ erhalten. Es ist möglich, dass die Vorrichtung 100 aus dem Lautsprechersignal 110 das Membranauslenkungssignal 130 mit mehr überlappenden Zeitblöcken $120_1$ bis $120_3$ prädizieren kann. So kann beispielsweise die Vorrichtung 100 vorgeben, dass die Zeitblöcke $120_1$ bis $120_3$ eine Blockgröße von 10 ms (es sind beispielsweise Blockgrößen ≥ 5 ms, ≥ 8 ms oder ≥ 10 ms vorteilhaft) aufweisen, wodurch die Vorrichtung 100 so viele Membranauslenkungssignalblöcke $130_1$ bis $130_3$ erhalten kann, so dass das komplette Lautsprechersignal 110 (beispielsweise die komplette Zeitdauer des Lautsprechersignals 110) durch die Zeitblöcke $120_1$ bis $120_3$ mit einer von der Vorrichtung 100 festgesetzten Blocklänge komplett wiederspiegeln kann. Somit kann beispielsweise das Membranauslenkungssignal 130 definieren, wie stark zu jedem Zeitpunkt das Lautsprechersignal 110 an einem Lautsprecher eine Membran auslenken würde.

Die Vorrichtung 100 ist konfiguriert, um eine zeitliche Position 140 einer maximalen Auslenkung eines aktuellen Membranauslenkungssignalblocks $130_2$ eines aktuellen Zeitblocks $120_2$ innerhalb eines Überlappbereichs 124 mit einem nachfolgenden Zeitblock $120_3$ zu ermitteln. Somit kann die Vorrichtung 100 beispielsweise innerhalb des Überlappbereichs 124 des aktuellen Zeitblocks $120_2$ den aktuellen Membranauslenkungssignalblock $130_2$ nach einer maximalen Auslenkung abtasten. Diese maximale Auslenkung kann beispielsweise zu einer Membranüberauslenkung führen, wenn die Vorrichtung 100 das Membranauslenkungssignal 130 nicht modifiziert.

Die Vorrichtung 100 ist zudem konfiguriert, um für den aktuellen Zeitblock $120_2$ unter Berücksichtigung eines Vergleichs des aktuellen Membranauslenkungssignalblocks $130_2$ mit einem nachfolgenden Membranauslenkungssignalblock $130_3$ oder einer Schätzung des nachfolgenden Membranauslenkungssignalblocks $130_3$ aus dem aktuellen Membranauslenkungssignalblock $130_2$ an der zeitlichen Position einen Pegel 150a zu berechnen (beispielsweise mit der Verarbeitungseinrichtung 150), bis zu welchem der aktuelle Membranauslenkungssignalblock $130_2$ ohne Membranüberauslenkung aussteuerbar ist. Durch den Pegel 150a kann die Vorrichtung 100 bestimmen, wie stark der aktuelle Membranauslenkungssignalblock $130_2$ beispielsweise gedämpft werden sollte, um in einem zu dem nachfolgenden Membranauslenkungssignalblock $130_3$ passenden Verhältnis den aktuellen Membranauslenkungssignalblock $130_2$ zu dämpfen, so dass eine hohe Klangqualität durch die Vorrichtung 100 erhalten bleiben kann.

Die Vorrichtung 100 ist ferner konfiguriert, um den aktuellen Membranauslenkungssignalblock $130_2$ auf Basis des Pegels 150a zu dämpfen, um einen modifizierten aktuellen Membranauslenkungssignalblock $160_2$ zu erhalten. Dies kann die Vorrichtung beispielsweise für jeden Membranauslenkungssignalblock $130_1$ bis $130_3$ durchführen, um beispielsweise gemäß Fig. 1 drei modifizierte Membranauslenkungssignalblöcke $160_1$ bis $160_3$ zu erhalten. Die modifizierten Membranauslenkungssignalblöcke $160_1$ bis $160_3$ können ein modifiziertes Membranauslenkungssignal 160 definieren.

Die Vorrichtung 100 ist ferner konfiguriert, um ein modifiziertes Lautsprechersignal 170 auf Basis des modifizierten aktuellen Membranauslenkungssignalblocks $160_2$ zu synthetisieren. Hierfür kann die Vorrichtung 100 beispielsweise aus jedem modifizierten Membranauslenkungssignalblock $160_1$, $160_2$ einen modifizierten Lautsprechersignalblock $170_1$, $170_2$ synthetisieren und beispielsweise mit einem Overlap-Add-Verfahren zu dem modifizierten Lautsprechersignal 170 zusammenfügen. Alternativ kann die Vorrichtung 100 konfiguriert sein, um zunächst die modifizierten Membranauslenkungssignalblöcke $160_1$, $160_2$ mit dem Overlap-Add-Verfahren zu dem modifizierten Membranauslenkungssignal 160 zusammenzufügen und um aus dem modifizierten Membranauslenkungssignal 160 in einem Schritt das komplette modifizierte Lautsprechersignal 170 zu synthetisieren. Optional kann die Vorrichtung 100 das so modifizierte Lautsprechersignal 170 bereitstellen und beispielsweise an einen Lautsprecher übertragen.

Zur Berechnung des Pegels 150a kann ein Quotienten zwischen dem aktuellen Membranauslenkungssignalblock $130_2$ an der zeitlichen Position 140 einerseits und einer Summe des nachfolgenden Membranauslenkungssignalblocks $130_3$ oder der Schätzung des nachfolgenden Membranauslenkungssignalblocks $130_3$ an der zeitlichen Position 140 und dem aktuellen Membranauslenkungssignalblock $130_2$ an der zeitlichen Position 140 andererseits bestimmen werden. Dieser Schritt kann beispielsweise mit der Verarbeitungseinrichtung 150 durchgeführt werden. Der Quotient kann beispielsweise definieren, in welchem Verhältnis der aktuelle Membranauslenkungssignalblock $130_2$ zu dem nachfolgenden Membranauslenkungssignalblock $130_3$ an der zeitlichen Position 140 steht. Der so berechnete Pegel 150a kann demnach definieren, wie stark der aktuelle Membranauslenkungssignalblock $130_2$ mindestens gedämpft werden sollte, damit eine hohe Klangqualität bei Vermeidung einer Membranüberauslenkung erhalten bleiben kann.

Der Quotient kann mit einem Sicherheitsfaktor skalieren werden, um dadurch beispielsweise eine stärke Dämpfung des Membranauslenkungssignals 130 hervorzurufen, wodurch ein mechanischer Schutz einer Membran eines Lautsprechers vor Membranüberauslenkung erhöht werden kann. Dieser Schritt kann beispielsweise mit der Verarbeitungseinrichtung 150 durchgeführt werden.

Der aktuelle Membranauslenkungssignalblock $130_2$ kann in zumindest einen Frequenzbandsignalzeitblock zerlegt sein. Dies kann beispielsweise durch die Verarbeitungseinrichtung 150 erfolgen. Somit kann die Vorrichtung 100 den aktuellen Membranauslenkungssignalblock $130_2$ in zumindest ein Frequenzband zerlegen, wobei der zumindest eine Frequenzbandsignalzeitblock ein Frequenzband des aktuellen Membranauslenkungssignalblocks $130_2$ für den kompletten aktuellen Zeitblock $120_2$ darstellen kann. Somit kann der aktuelle Membranauslenkungssignalblock $130_2$ beispielsweise von der Vorrichtung 100 in mehrere Frequenzbandsignalzeitblöcke zerlegt werden, die alle den kompletten aktuellen Zeitblock $120_2$ und ein voneinander unterschiedliches Frequenzband des aktuellen Membranauslenkungssignalblocks $130_2$ darstellen können. Durch dieses Merkmal kann ermöglicht werden, dass die Vorrichtung 100 den aktuellen Membranauslenkungssignalblock $130_2$ so dämpfen bzw. modifizieren kann, dass es zu keinen oder nur geringen Nicht-Linearitäten in dem modifizierten aktuellen Membranauslenkungssignalblock $160_2$ kommt. Hierdurch kann durch die Vorrichtung 100 eine hohe Klangqualität gewährleistet werden. Dieses hierin beschriebene Merkmal kann beispielsweise eine Frequenzbandzerlegung 151 durch die Verarbeitungseinrichtung 150 darstellen.

Die Vorrichtung 100 kann konfiguriert sein, um für jeden des zumindest einen Frequenzbandsignalzeitblocks zumindest eine weitere zeitliche Position 142 zu ermitteln, an der eine vorbestimmte Signalkombination (z. B. des aktuellen Membranauslenkungssignalblocks $130_2$ mit dem vorangegangenen modifizierten Membranauslenkungssignalblock $160_1$) einen maximalen Auslenkungsgrenzwert überschreitet, und zwar in dem ersten Überlappbereich 122 des aktuellen Zeitblocks $120_2$ mit dem vorangegangenen Zeitblock $120_1$ sowie in dem restlichen Zeitblock $120_2$ (z. B. auch in dem Überlappbereich 124). Die vorbestimmte Signalkombination kann beispielsweise einen Overlapp-Add des aktuellen Membranauslenkungssignalblocks $130_2$ mit dem modifizierten vorangegangenen Membranauslenkungssignalblock 160, in dem ersten Überlappbereich 122 darstellen. Der maximale Auslenkungsgrenzwert kann beispielsweise definieren, ab wann z. B. eine Amplitude des aktuellen Membranauslenkungssignalblocks $130_2$ zu einer Membranüberauslenkung führen würde, wenn die Vorrichtung 100 den aktuellen Membranauslenkungssignalblock $130_2$ nicht dämpfen bzw. modifizieren würde. Somit kann ermöglicht werden, dass pro Frequenzbandsignalzeitblock zumindest eine weitere zeitliche Position 142, die beispielsweise auch als kritische zeitliche Position bezeichnet werden kann, ermittelt wird, wodurch die Vorrichtung 100 bestimmen kann, wie der zumindest eine Frequenzbandsignalzeitblock modifiziert bzw. gedämpft werden sollte, damit eine Membranüberauslenkung vermieden werden kann und somit ein guter mechanischer Schutz für Lautsprecher durch die Vorrichtung 100 gewährleistet werden kann. Dieses Merkmal kann beispielsweise mittels einer Positionsermittlung 152 der Verarbeitungseinrichtung 150 erfolgen.

Die Signalkombination kann eine additive Kombination des aktuellen Membranauslenkungssignalblocks $130_2$ mit einem modifizierten vorangegangenen Membranauslenkungssignalblock $160_1$ und eine additive Kombination des jeweiligen Frequenzbandsignalzeitblocks mit dem modifizierten vorangegangenen Membranauslenkungssignalblock $160_1$ und eine additive Kombination eines Betrags des aktuellen Membranauslenkungssignalblocks $130_2$ mit einem Betrag des modifizierten vorangegangenen Membranauslenkungssignalblocks $160_1$ umfassen. Somit sollte z. B. mindestens eine der drei additiven Kombinationen an der weiteren zeitlichen Position 142 den maximalen Auslenkungsgrenzwert überschreiten. Den drei additiven Kombinationen liegt die Erkenntnis zugrunde, dass Auslenkungsspitzen (beispielsweise maximale Auslenkungen) eines Frequenzbandsignalzeitblocks sich bei einer Superposition aufgrund einer Phasenlage auslöschen und in dem aktuellen Membranauslenkungssignalblock $130_2$ unsichtbar sein können. Ferner kann mit den drei additiven Kombinationen bedacht werden, dass Auslenkungsspitzen in hochfrequenten Frequenzbandsignalzeitblöcken ausreichend stark gedämpft werden sollten und Auslenkungsspitzen in dem aktuellen Membranauslenkungssignalblock $130_2$ durch nahe beieinanderliegende Extrema in den einzelnen Frequenzbandsignalzeitblöcken verschmiert sein können. Somit kann durch die drei additiven Kombinationen der Signalkombination zumindest eine weitere zeitliche Position 142 mit der Vorrichtung 100 ermittelt werden, an der eine Membranüberauslenkung auftreten kann und somit von der Vorrichtung 100 modifiziert werden sollte.

Die Vorrichtung 100 ist konfiguriert, um einen Dämpfungsfaktor für jeden des zumindest einen Frequenzbandsignalzeitblocks, basierend auf dem Pegel 150a und der weiteren zeitlichen Position 142 zu bestimmen, um den aktuellen Membranauslenkungssignalblock $130_2$ zu dämpfen. Dies kann mit der Dämpfungsfaktorenermittlung 153 erfolgen. Somit kann beispielsweise die Dämpfungsfaktorenermittlung 153 von der Positionsermittlung 152 die zumindest eine weitere zeitliche Position 142 pro Frequenzbandsignalzeitblock erhalten und von der Verarbeitungseinrichtung 150 den Pegel 150a erhalten. Somit kann ermöglicht werden, dass bei einer Optimierung der Dämpfungsfaktoren eine Verwendung von zufälligen Startwerten vermieden werden kann und stattdessen Auslenkungswerte an der weiteren zeitlichen Position 142 verwendet werden können, was die Optimierung beschleunigen kann. Somit ist die Vorrichtung 100 ausgelegt, um sehr effizient z. B. bei Gewährleistung hoher Klangqualität des Membranauslenkungssignals 130 so zu modifizieren bzw. zu dämpfen, dass eine Membranüberauslenkung hervorgerufen durch das Lautsprechersignal 110 vermieden werden kann.

Der Dämpfungsfaktor wird durch die Vorrichtung 100 beispielsweise pro Frequenzbandsignalzeitblock für den aktuellen Zeitblock $120_2$ mit einer Version des Dämpfungsfaktors pro Frequenzbandsignalzeitblock für den vorangegangenen Zeitblock $120_1$, verringert in Dämpfungsstärke durch eine vorbestimmte Abklingfunktion, verglichen und für den aktuellen Zeitblock $120_2$ unter denselben einen gewählter Dämpfungsfaktor verwendet, der mit einer höheren Dämpfung verbunden sein kann. Somit kann hier beispielsweise bedacht werden, dass eine Dämpfung des vorangegangenen Membranauslenkungssignalblocks 130, eine Abklingfunktion aufweisen kann, die auch eine Dämpfung des aktuellen Membranauslenkungssignalblocks $130_2$ durch die Vorrichtung 100 beeinflussen kann, wodurch beispielsweise der aktuelle Membranauslenkungssignalblock $130_2$ beispielsweise mit den Dämpfungsfaktoren verringert in Dämpfungsstärke durch die vorbestimmte Abklingfunktion bereits ausreichend gedämpft werden können, um eine Membranüberauslenkung zu vermeiden. Somit können mit diesem Merkmal die Dämpfungsfaktoren so gewählt werden, dass der aktuelle Membranauslenkungssignalblock $130_2$ ausreichend stark gedämpft wird durch die Vorrichtung 100, um eine Membranüberauslenkung zu vermeiden und somit einen guten mechanischen Schutz durch die Vorrichtung 100 für einen Lautsprecher zu bieten. Dies kann mit der Dämpfungsfaktorenermittlung 153 erfolgen.

Die Vorrichtung 100 kann konfiguriert sein, um den aktuellen Membranauslenkungssignalblock $130_2$ in einen perkussiven Signalanteil und einen harmonischen Signalanteil aufzuspalten und die vorbestimmte Abklingfunktion abhängig von dem perkussiven Signalanteil und/oder dem harmonischen Signalanteil zu bestimmen. Dies kann beispielsweise mit einer Membranauslenkungssignalaufspaltung 154 vor der Frequenzbandzerlegung 151 erfolgen. Durch dieses Merkmal kann die Klangqualität verbessert werden, da beispielsweise kürzere Zeitkonstanten der vorbestimmten Abklingfunktion besser für perkussive Signale geeignet sind und längere Zeitkonstanten z. B. für harmonische Signale. Die Aufspaltung in den perkussiven Signalanteil an den harmonischen Signalanteil kann beispielsweise für den kompletten aktuellen Membranauslenkungssignalblock $130_2$ erfolgen oder für jeden Frequenzbandsignalzeitblock des aktuellen Membranauslenkungssignalblocks $130_2$ erfolgen.

Die Vorrichtung 100 ist schließlich konfiguriert, um aus dem modifizierten aktuellen Membranauslenkungssignalblock $160_2$ einen modifizierten aktuellen Lautsprechersignalblock $170_2$ zu berechnen und den modifizierten aktuellen Lautsprechersignalblock $170_2$ einem Overlap-Add mit dem modifizierten vorangegangenen Lautsprechersignalblock $170_1$ zu unterziehen, um eine modifiziertes Lautsprechersignal 170 zu synthetisieren. Bei der Berechnung des aktuellen Lautsprechersignalblocks $170_2$ existiert z. B. noch kein nachfolgender modifizierter Lautsprechersignalblock $170_3$. Somit kann eine Ausgabe an einen Lautsprecher z. B. die Überlappung des vorangegangenen modifizierten Lautsprechersignalblocks $170_1$ mit einem ersten Teil des aktuellen modifizierten Lautsprechersignalblocks $170_2$ sein, wobei der erste Teil z. B. ein Überlappbereich 122 des aktuellen Zeitblocks $120_2$ mit dem vorrangegangenen Zeitblock 120, sein kann.

Alternativ kann die Vorrichtung 100 konfiguriert sein, um anstelle des modifizierten aktuellen Lautsprechersignalblocks $170_2$ ein aktuelles Lautsprechersignal 110 bereitzustellen, wenn eine maximale Auslenkung des aktuellen Membranauslenkungssignalblocks $130_2$ des aktuellen Zeitblocks $120_2$ einen maximalen Auslenkungsgrenzwert nicht überschreitet. Somit kann die Vorrichtung 100 sehr effizient einen Lautsprecher vor Membranüberauslenkung schützen, indem die Vorrichtung 100 nur dann das aktuelle Lautsprechersignal 110 dämpft bzw. modifiziert, wenn die Vorrichtung 100 erkennt, dass eine Membranüberauslenkung durch das aktuelle Lautsprechersignal 110 an dem Lautsprecher hervorgerufen werden kann.

Um den aktuellen Membranauslenkungssignalblock $130_2$ zu dämpfen, können ein oder mehrere Dämpfungsfaktoren basierend auf dem Pegel 150a berechnet (z. B. mit der Dämpfungsfaktorenermittlung 153) und die einen oder mehreren Dämpfungsfaktoren mit dem aktuellen Membranauslenkungssignalblock $130_2$ verrechnet werden. Mit einer Verrechnungseinrichtung 155 können die einen oder mehreren Dämpfungsfaktoren mit dem aktuellen Membranauslenkungssignalblock $130_2$ so verrechnet werden, dass ein modifizierter aktueller Membranauslenkungssignalblock $160_2$ ermittelt werden kann, der nicht zu einer Membranüberauslenkung führen sollte.

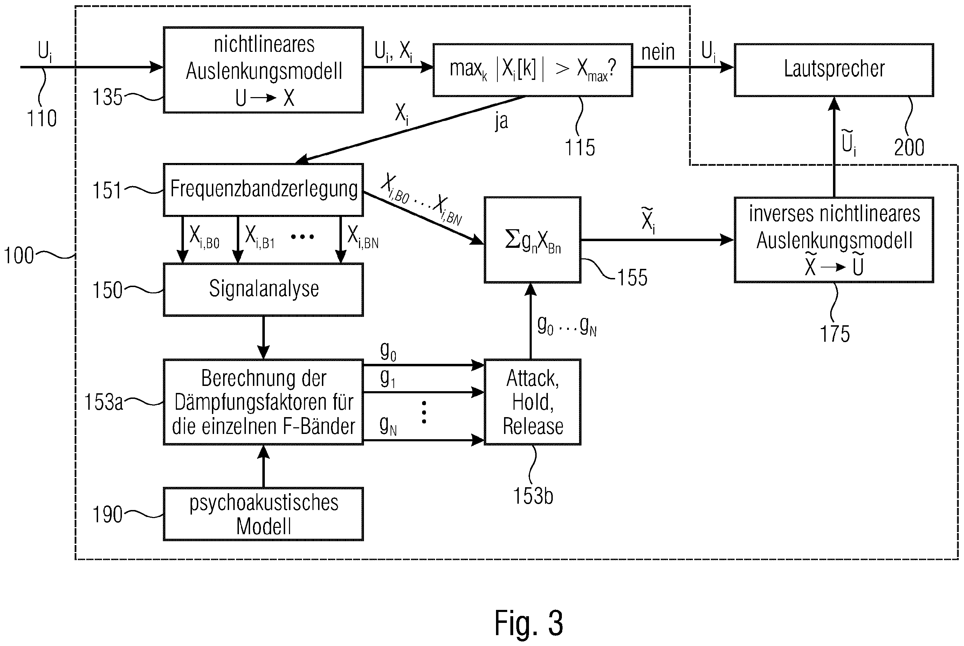

Fig. 3 zeigt ein Implementierungsbeispiel der Vorrichtung 100. In anderen Worten z. B. ein Gesamtsignalfluss in einem Auslenkungslimiter (z. B. die Vorrichtung 100).

Im Folgenden kann die Vorrichtung 100 auch als Auslenkungslimiter bezeichnet werden. Gemäß einem Ausführungsbeispiel kann die Vorrichtung 100 zur Modifizierung eines Lautsprechersignals U, 110 zur Vermeidung einer Membranüberauslenkung, z. B. $X > X_{max}$, konfiguriert sein, um blockweise, in überlappenden Zeitblöcken, auf Basis des Lautsprechersignals U, 110 ein Membranauslenkungssignal X zu prädizieren 135, um pro Zeitblock einen Membranauslenkungssignalblock $X_i$ zu erhalten. Hierbei kann z. B. das komplette Lautsprechersignal U, 110 von der Vorrichtung 100 erfasst werden oder blockweise, in überlappenden Zeitblöcken. So kann ein aktuelles Lautsprechersignal eines aktuellen Zeitblocks beispielsweise als $U_i$ bezeichnet werden und $X_i$ als ein aktueller Membranauslenkungssignalblock, eines gleichen Zeitblocks, bezeichnet werden. Dabei kann i eine positive ganze Zahl sein. Das Membranauslenkungssignal X kann dieselben Merkmale und Funktionalitäten, wie das Membranauslenkungssignal 130 aus Fig. 1 aufweisen und der aktuelle Membranauslenkungssignalblock $X_i$ kann dieselben Merkmale und Funktionalitäten, wie der Membranauslenkungssignalblock $130_2$ aus Fig. 1. Das Prädizieren 135 des Membranauslenkungssignals X kann z. B. mittels eines nichtlinearen Auslenkungsmodells erfolgen.

Die Vorrichtung 100 kann konfiguriert sein, um eine zeitliche Position $k_0$ einer maximalen Auslenkung $X_i[k_0]$ eines aktuellen Membranauslenkungssignalblocks $X_i$ eines aktuellen Zeitblocks i innerhalb eines Überlappbereichs mit einem nachfolgenden Zeitblock i+1 zu ermitteln. Dies erfolgt z. B. in der Signalanalyse 150.

Die Vorrichtung 100 kann konfiguriert sein, um für den aktuellen Zeitblock i unter Berücksichtigung eines Vergleichs des aktuellen Membranauslenkungssignalblocks (z. B. $X_i[k_0]$) mit einem nachfolgenden Membranauslen-

kungssignalblock (z. B. $X_{i+1}[k_0-M_{step}]$) oder einer Schätzung des nachfolgenden Membranauslenkungssignalblocks (z. B. $X_{i+1}[k_0-M_{step}]$) aus dem aktuellen Membranauslenkungssignalblock $X_i$ an der zeitlichen Position (z. B $k_0$ in dem aktuellen Zeitblock i und $k_0-M_{step}$ in dem nachfolgenden Zeitblock i+1, wobei $k_0$ und $k_0-M_{step}$ in dem Überlappbereich der beiden Zeitblöcke für den jeweiligen Membranauslenkungssignalblock den korrespondierenden Zeitpunkt darstellen.) einen Pegel (z. B. $h_l X_{max}$) zu berechnen, bis zu welchem der aktuelle Membranauslenkungssignalblock $X_i$ ohne Membranüberauslenkung aussteuerbar ist. Dies kann in der Signalanalyse 150 erfolgen.

Ferner kann die Vorrichtung 100 konfiguriert sein, um den aktuellen Membranauslenkungssignalblock X, auf Basis des Pegels ($h_l X_{max}$) zu dämpfen, um einen modifizierten aktuellen Membranauslenkungssignalblock $\tilde{X}_i$ zu erhalten. Dies kann mit der Verrechnungseinrichtung 155 erfolgen.

Des Weiteren kann die Vorrichtung 100 konfiguriert sein, um ein modifiziertes Lautsprechersignal $\tilde{U}$ auf Basis des modifizierten aktuellen Membranauslenkungssignalblocks $\tilde{X}_i$ zu synthetisieren 175. Hierbei kann z. B. das komplette modifizierte Lautsprechersignal $\tilde{U}$ basierend auf einem komplett modifizierten Membranauslenkungssignal $\tilde{X}$ synthetisiert 175 werden oder blockweise, in überlappenden Zeitblöcken, so dass ein aktuelles modifiziertes Lautsprechersignal $\tilde{U}_i$ beispielsweise basierend auf dem aktuellen modifizierten Membranauslenkungssignalblock $\tilde{X}_i$, eines gleichen Zeitblocks, synthetisiert 175 werden. Dabei kann i eine positive ganze Zahl sein und das komplette modifizierte Membranauslenkungssignal $\tilde{X}$ den aktuellen Membranauslenkungssignalblock $\tilde{X}_i$ aufweisen. Das modifizierte Membranauslenkungssignal $\tilde{X}$ kann dieselben Merkmale und Funktionalitäten, wie das modifizierte Membranauslenkungssignal 160 aus Fig. 1 aufweisen, der aktuelle modifizierte Membranauslenkungssignalblock $\tilde{X}_i$ kann dieselben Merkmale und Funktionalitäten, wie der aktuelle modifizierte Membranauslenkungssignalblock $160_2$ aus Fig. 1 aufweisen, das modifizierte Lautsprechersignal $\tilde{U}$ kann dieselben Merkmale und Funktionalitäten, wie das modifizierte Lautsprechersignal 170 aus Fig. 1 aufweisen und das aktuelle modifizierte Lautsprechersignal $\tilde{U}_i$ kann dieselben Merkmale und Funktionalitäten, wie das aktuelle modifizierte Lautsprechersignal $170_2$ aus Fig. 1 aufweisen. Das Synthetisieren 175 des modifizierten Lautsprechersignals $\tilde{U}$ kann z. B. mittels eines inversen nichtlinearen Auslenkungsmodells erfolgen. Optional kann das modifizierte Lautsprechersignal $\tilde{U}$ oder das aktuelle modifizierte Lautsprechersignal $\tilde{U}_i$ von der Vorrichtung 100 an einen Lautsprecher 200 übertragen werden.

Optional kann die Vorrichtung 100 konfiguriert sein, um anstelle des modifizierten aktuellen Lautsprechersignalblocks $\tilde{U}_i$, ein aktuelles Lautsprechersignal $U_i$ bereitzustellen und z. B. an den Lautsprecher 200 zu übertragen, wenn eine maximale Auslenkung des aktuellen Membranauslenkungssignalblocks $X_i$ des aktuellen Zeitblocks i einen maximalen Auslenkungsgrenzwert $X_{max}$ nicht überschreitet [z. B. $max_k|X_i[k]| < X_{max}$], was die Vorrichtung 100 mit einer Abfrage 115 durchführen kann.

Ferner kann die Vorrichtung 100 konfiguriert sein, um den aktuellen Membranauslenkungssignalblock ($X_i$) in zumindest einen Frequenzbandsignalzeitblock ($X_{i,B0}$ bis $X_{i,BN}$, mit N Frequenzbandsignalzeitblöcken, wobei N eine positive ganze Zahl ist) mit einer Frequenzbandzerlegung 151 zu zerlegen.

Die Vorrichtung kann konfiguriert sein, um für jeden des zumindest einen Frequenzbandsignalzeitblocks $X_{i,B0}$ bis $X_{i,BN}$ zumindest eine weitere zeitliche Position ($k_{c,l}$) zu ermitteln, an der eine vorbestimmte Signalkombination einen maximalen Auslenkungsgrenzwert $X_{max}$ überschreitet, und zwar in dem ersten Überlappbereich des aktuellen Zeitblocks i mit dem vorangegangenen Zeitblock i-1 sowie in dem restlichen Zeitblock i. Dies erfolgt z. B. mittels der Signalanalyse 150.

Es kann vorgesehen sein, einen Dämpfungsfaktor $g_0$ bis $g_N$ für jeden des zumindest einen Frequenzbandsignalzeitblocks $X_{i,B0}$ bis $X_{i,BN}$, basierend auf dem Pegel $h_l X_{max}$ und der weiteren zeitlichen Position ($k_{c,l}$) zu bestimmen, um den aktuellen Membranauslenkungssignalblock $X_i$ zu dämpfen. Dies erfolgt z. B. mittels der Dämpfungsfaktorenermittlung 153a.

Die Vorrichtung 100 kann insbesondere konfiguriert sein, um einen Dämpfungsfaktor $g_0$ bis $g_N$ pro Frequenzbandsignalzeitblock $X_{i,B0}$ bis $X_{i,BN}$ für den aktuellen Zeitblock i mit einer Version des Dämpfungsfaktors $g_0$ bis $g_N$ pro Frequenzbandsignalzeitblock $X_{i,B0}$ bis $X_{i,BN}$ für den vorangegangenen Zeitblock i-1, verringert in Dämpfungsstärke durch eine vorbestimmte Abklingfunktion, zu vergleichen und für den aktuellen Zeitblock unter denselben einen gewählten Dämpfungsfaktor $g_0$ bis $g_N$ zu verwenden, der mit einer höheren Dämpfung verbunden ist. Dies erfolgt z. B. über die Attack-, Hold- und Release-Funktionen 153b. Falls gemäß einem Ausführungsbeispiel gilt, dass ein aktuelles $g_n$ kleiner einem alten $g_n$ ist, sollten die Attack-, Hold- und Release-Funktionen 153b das aktuelle $g_n$ wählen, ansonsten sollte weiter der Release-Funktion gefolgt werden, wobei beispielsweise ein höherer Dämpfungsfaktor $g_n$ eine kleinere Dämpfung verursachen kann. Gemäß eines Ausführungsbeispiel kann ein Dämpfungsfaktor $g = 1$ eine Dämpfung von 0 dB definieren und ein Dämpfungsfaktor $g = 0.1$ eine Dämpfung von 20 dB definieren.

Optional kann die Dämpfungsfaktorenermittlung 153a ein psychoakustisches Modell 190 nutzen, um eine Ermittlung der Dämpfungsfaktoren $g_0$ bis $g_N$ zu optimieren und dadurch die Klangqualität des modifizierten Lautsprechersignals $\tilde{U}$ bzw. des aktuellen Lautsprechersignalblocks $\tilde{U}_i$ zu verbessern.

Somit kann das in Fig. 3 dargestellte intelligente Signalanalysesystem 150 sowohl einer Gesamtauslenkung (z. B. des aktuellen Membranauslenkungssignalblocks $X_i$) als auch der Auslenkung in den jeweiligen Frequenzbändern (z. B. in den einzelnen Frequenzbandsignalzeitblöcken $X_{i,B0}$ bis $X_{i,BN}$) darstellen, die dafür sorgen kann, dass möglichst nahe an den Auslenkungsgrenzwert $X_{max}$ herangefahren werden kann, ohne unnötigen Headroom. Unter Headroom kann ein ungenutzter Anteil an einer maximalen Auslenkung einer Membran des Lautsprechers 200 verstanden werden. Somit wird beispielsweise die Membran kaum oder nie vollständig ausgelenkt, wenn Headroom vorliegt. Ist der Headroom zu groß, kann an dem Lautsprecher keine hohe Leistungsfähigkeit erreicht werden. Die Vorrichtung verursacht z. B. nur einen sehr kleinen bis keinen Headroom, wodurch eine sehr hohe Leistungsfähigkeit des Lautsprechers 200 erreicht werden kann. Ferner kann Fig. 3 ein System darstellen, das die besten Teilansätze zu einem optimalen Gesamtsystem kombinieren kann und eine separate Attack-, Hold- und Release-Regelung 153b für perkussive und harmonische Signalanteile aufweisen kann, die zu einer Verbesserung der Klangqualität führen.

## Vorverarbeitung

In anderen Worten zeigt Fig. einen Auslenkungslimiter 100, dem eine Eingangsspannung U (z. B. das Lautsprechersignal U, 110) z. B. blockweise (z. B. in Zeitblöcken i) zugeführt wird. Die Zeitblöcke i können eine gemeinsame zeitliche Blockgröße aufweisen, die z. B. definiert, wie lang ein Zeitblock i ist. Blockgrößen ≥ 10 ms haben sich bisher als besonders gut erwiesen. Es sind aber auch Blockgrößen von ≥ 50 μs, ≥ 1 ms, ≥ 5 ms, ≥ 12 ms, ≥ 15 ms, ≥ 20 ms oder ≥ 50 ms möglich. Ein Spannungsverlauf im i-ten Block kann als $U_i$ bezeichnet werden. Der Spannungsverlauf im i-ten Block kann ein Beispiel für den aktuellen Lautsprechersignalblock $U_i$ in dem aktuellen Zeitblock i sein.

Um eine Geschwindigkeit von nachfolgenden Verarbeitungsschritten zu erhöhen, kann ggf. eine Tiefpassfilterung und Unterabtastung erfolgen, da hohe Frequenzen kaum relevant für eine Membranauslenkung sind.

Die Spannung $U_i$ wird z. B. als Eingangssignal eines nichtlinearen Auslenkungsmodells zur Prädiktion 135 der Auslenkung $X_i$ (des aktuellen Membranauslenkungssignalblocks X;) genutzt. Das Auslenkungsmodell ermöglicht eine Steuerung ohne Feedback-Pfad. Mögliche Ausführungen des Auslenkungsmodells sind ein einfaches Filter, ein physikalisches Strukturmodell (z. B. im Zustandsraum implementiert) oder ein Machine-Learning-Modell (z. B. Neuronales Netzwerk). Das Auslenkungsmodell ist nicht auf ein bestimmtes Aktorprinzip begrenzt - Modelle für elektrodynamische Lautsprecher, piezoelektrische Lautsprecher, elektrostatische Lautsprecher können modular eingesetzt werden. Das Auslenkungsmodell kann zudem adaptiv, also zeitlich veränderlich implementiert werden, um die Parameter stetig optimal an den Lautsprecher anzupassen. In diesem Fall kann die Vorrichtung einen Feedback-Pfad aufweisen. Alle hierin aufgeführten Aufzählungen der Auslenkungsmodelle und Aktorprinzipien sind hierbei als beispielhaft und nicht als abschließend anzusehen.

Wenn die prädizierte Auslenkung (z. B. eine Amplitude des aktuellen Membranauslenkungssignalblocks $X_i$) den Grenzwert $X_{max}$ z. B. nicht überschreitet, wird das Eingangssignal direkt an den Lautsprecher gegeben. Ansonsten wird das prädizierte Auslenkungssignal z. B. weiterverarbeitet und in $N \geq 1$ benachbarte Frequenzbänder (z. B. die Frequenzbandsignalblöcke $X_{i,B0}$ bis $X_{i,BN}$) zerlegt. Dies entspricht beispielsweise der Funktionsweise einer Filterbank. Mögliche Implementierungen sind zum Beispiel aneinandergrenzende Bandpass-Filter oder auch Perfect Reconstruction Filter Banks wie MDCT (modifizierte diskrete Kosinustransformation) oder PQMF (Pseudo-Quadratur-Spiegel-Filter). Es ist zu beachten, dass diese Filterbank (z. B. die Frequenzbandzerlegung 151) und das psychoakustische Modell 190 möglichst die gleichen Frequenzbänder betrachten sollten. Alle hierin aufgeführten Aufzählungen der Methoden zur Zerlegung des prädizierten Auslenkungssignals $X_i$ in benachbarte Frequenzbänder (B0 bis BN, wobei N z. B. eine natürliche Zahl zwischen 1 und 100 ist.) sind hierbei als beispielhaft und nicht als abschließend anzusehen.

## Signalanalyse und Berechnung der Dämpfungsfaktoren

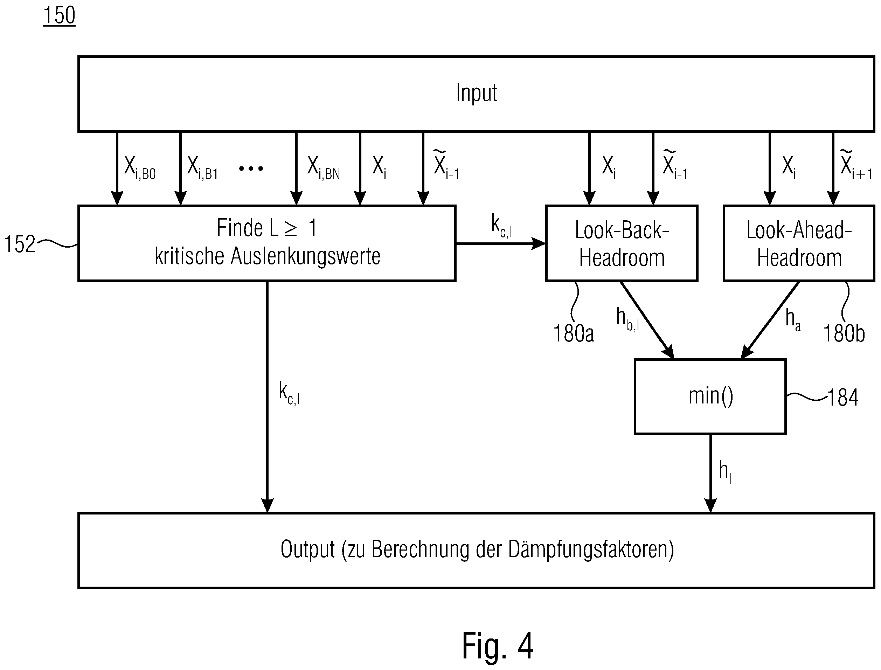

Zunächst erfolgt z. B. eine Signalanalyse 150 unter Einbezug aller Zeitsignale der einzelnen Frequenzbänder $X_{i,Bn}$ (wobei n eine natürliche Zahl zwischen 0 und N ist.) sowie der Gesamtauslenkungssignale $\tilde{X}_{i-1}$, $X_i$ und ggf. $X_{i+1}$ (wobei $\tilde{X}_{i-1}$ z. B. ein modifiziertes Gesamtauslenkungssignal des dem aktuellen Zeitblock i vorangegangenen Zeitblocks i-1 definiert). Ein Blockschaltbild für eine mögliche Ausführungsform wird in Fig. 4 dargestellt.

Fig. 4 zeigt ein Blockschaltbild, das einen Signalfluss z. B. der Vorrichtung in der Signalanalyse verdeutlicht, die dieselben Merkmale und Funktionalitäten wie die Verarbeitungseinrichtung 150 aus Fig. 1 und wie die Signalanalyse 150 aus Fig. 3 aufweisen kann.

Zunächst wird z. B. aufgrund einer Overlap-Add-Verarbeitung betrachtet, wie groß die Gesamtdämpfung des aktuellen Blocks i mindestens sein sollte, damit keine Überschreitung von $X_{max}$ im Überlappungsbereich mit dem Folgeblock i + 1 auftritt. Dabei wird darauf geachtet, dass der Folgeblock i + 1 nicht zu stark gedämpft wird. Letztere Maßnahme ist nicht notwendig, um den Schutz des Wandlers zu garantieren, sondern um die Klangqualität zu maximieren. Der Look-Ahead-Headroom $h_a$ (z. B. der zweite maximale Auslenkungsanteil 180b, $h_a$) berechnet sich somit z. B. durch

$$k_o = \operatorname{argmax}|X_i[M_{step}...M_{\text{block}}]|$$

$$h_{\mathrm{a}} = \frac{X_i[k_{\mathrm{o}}]}{X_i[k_{\mathrm{o}}] + X_{i+1}[k_{\mathrm{o}} - M_{\mathrm{step}}]} s \mid s \in [0; 1]$$

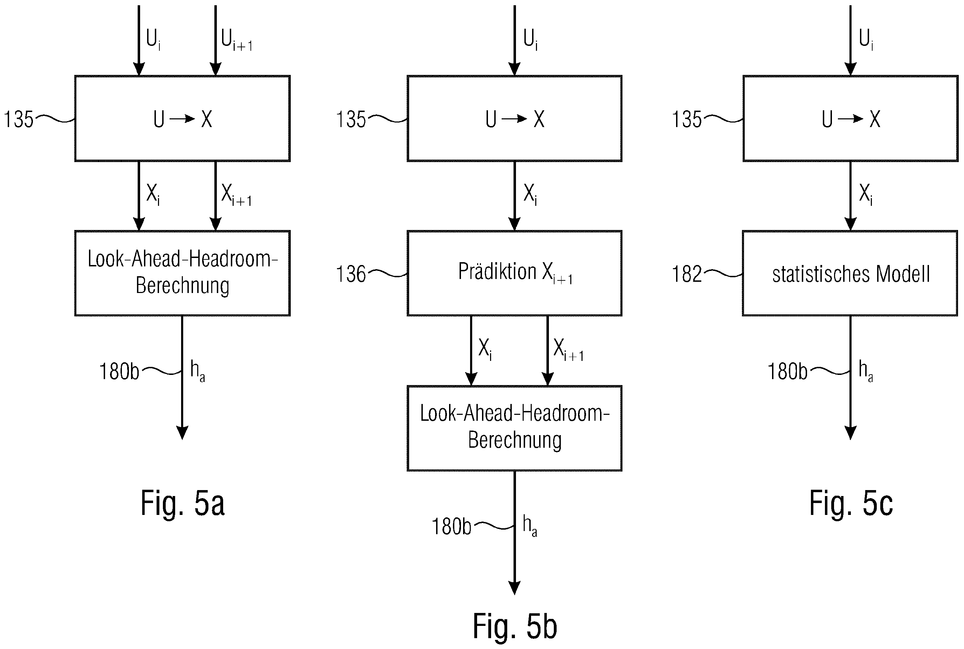

wobei $X_i$ das Zeitsignal der Gesamtauslenkung im $i$-ten Signalblock (z. B. der aktuelle Membranauslenkungssignalblock), $M_{\mathrm{block}}$ die Blocklänge und $M_{\mathrm{step}}$ die Schrittweite der Overlap-Add-Signalverarbeitung und $s$ einen parametrischen Sicherheitsfaktor darstellen können. Im Folgenden kann der zweite maximale Auslenkungsanteil 180b, $h_{\mathrm{a}}$ auch als Look-Ahead-Headroom bezeichnet werden. Durch das Look-Ahead erhöht sich z. B. die Signalverzögerung um $M_{\mathrm{step}}$ Samples. Ein entsprechendes Prädiktionsmodell für den künftigen Auslenkungsverlauf (z. B. den nachfolgenden Membranauslenkungssignalblock $X_{i+1}$) auf Basis des aktuellen Signalverlaufs (z. B. dem aktuellen Membranauslenkungssignalblock $X_i$), z. B. mittels eines Neuronalen Netzwerks, oder ein statistisches Modell für die direkte Prädiktion von $h_{\mathrm{a}}$ auf Basis des aktuellen Signalblocks (z. B. dem aktuellen Membranauslenkungssignalblock $X_i$) könnte die Betrachtung des zweiten Signalblocks (z. B. dem nachfolgenden Membranauslenkungssignalblock $X_{i+1}$) erübrigen. Fig. 5a, Fig. 5b und Fig. 5c veranschaulichen mögliche Ausführungen der Look-Ahead-Headroom-Kalkulation 180b.

Fig. 5a, Fig. 5b und Fig. 5c zeigen Ausführungsformen der Look-Ahead-Headroom-Kalkulation. Mit Berechnung des künftigen Signalverlaufs (siehe Fig. 5a), mit Schätzung des künftigen Signalverlaufs auf Basis des aktuellen Signalblocks (siehe Fig. 5b), mit direkter Schätzung des Look-Ahead-Headrooms $h_{\mathrm{a}}$ auf Basis des aktuellen Signalverlaufs (siehe Fig. 5c).

Somit zeigt Fig. 5a z. B. eine Berechnung des zweiten maximalen Auslenkungsanteil 180b, $h_{\mathrm{a}}$ basierend auf einer Prädiktion 135 des aktuellen Membranauslenkungssignalblocks $X_i$, basierend auf dem aktuellen Lautsprechersignal $U_i$, und des nachfolgenden Membranauslenkungssignalblocks $X_{i+1}$, basierend auf dem nachfolgenden Lautsprechersignal $U_{i+1}$, wobei die Prädiktion 135 z. B. mittels einem nichtlinearen Auslenkungsmodell erfolgt. Somit kann von der Vorrichtung 100 sehr genau bestimmt werden, wie stark der aktuelle Membranauslenkungssignalblock $X_i$ gedämpft werden sollte, damit ein hoher mechanischer Schutz eines Wandlers (z. B. Membran, Aufhängung) des Lautsprechers 200 durch die Vorrichtung gewährleistet werden kann.

Fig. 5b zeigt z. B. eine Berechnung des zweiten maximalen Auslenkungsanteils 180b, $h_{\mathrm{a}}$, bei der der nachfolgende Membranauslenkungssignalblock $X_{i+1}$ auf Basis des aktuellen Membranauslenkungssignalblock $X_i$ geschätzt 136 wird, wodurch die Berechnung des zweiten maximalen Auslenkungsanteils 180b, $h_{\mathrm{a}}$ schneller und somit effizienter erfolgen kann. Aus dem aktuellen Membranauslenkungssignalblock $X_i$ und dem geschätzten nachfolgenden Membranauslenkungssignalblock $X_{i+1}$ kann der zweite maximale Auslenkungsanteils 180b, $h_{\mathrm{a}}$ mittels der Vorrichtung ermittelt werden. Die Schätzung 136 des nachfolgenden Membranauslenkungssignalblocks $X_{i+1}$ kann z. B. über ein neuronales Netzwerk erfolgen.

Fig. 5c zeigt z. B. eine Berechnung des zweiten maximalen Auslenkungsanteils 180b, $h_{\mathrm{a}}$, bei der der zweite maximale Auslenkungsanteil 180b, $h_{\mathrm{a}}$, basierend auf dem aktuellen Membranauslenkungssignalblock $X_i$ geschätzt 182 wird. Somit kann die Berechnung des zweiten maximalen Auslenkungsanteils 180b, $h_{\mathrm{a}}$ noch schneller und effizienter erfolgen, da der nachfolgende Membranauslenkungssignalblock $X_{i+1}$ nicht für die Berechnung benötigt wird. Die Schätzung 182 kann z. B. über ein neuronales Netzwerk erfolgen.

Die Kalkulation des Look-Ahead-Headrooms $h_{\mathrm{a}}$ baut explizit nicht auf den folgenden Signalanalyseschritten auf, kann also mit den entsprechenden Eingangssignalen separat erfolgen.

Gemäß Fig. 4 kann ein nächster Schritt in der Signalanalyse 150 die Identifikation kritischer Auslenkungswerte 152 in den prädizierten Signalen (z. B. dem Membranauslenkungssignal X, wie z. B. $X_i$ und $X_{i+1}$, bzw. den Frequenzbandsignalblöcken $X_{i,B0}$ bis $X_{i,BN}$) umfassen, die später dazu dienen können, die Dämpfungsfaktoren für die einzelnen Frequenzbänder zu berechnen.

Zur Suche der kritischen Auslenkungswerte 152 (bzw. weiterer zeitlicher Positionen) dienen z. B. drei verschiedene Signalkombinationen (z. B. additive Kombinationen):

1.

$$X_{\mathrm{alt}} + X_{\mathrm{i}},$$

2.

$$X_{\mathrm{alt}} + X_{\mathrm{i,B0}} \dots X_{\mathrm{alt}} + X_{\mathrm{i,B}N},$$

3.

$$|X_{\text{alt}}| + |X_{\text{i}}|,$$

wobei

$$X_{\text{alt}}[k] = \begin{cases} \tilde{X}_{i-1}\big[k + M_{step}\big], \, k < M_{\text{block}} - M_{step} \\ 0, \, k \geq M_{\text{block}} - M_{step} \end{cases},$$

In den drei Signalkombinationen werden z. B. alle Extrema, welche die Auslenkungsgrenze $X_{\text{max}}$ überschreiten, als kritische Auslenkungswerte identifiziert. Auf diese Weise werden z. B. $L$ kritische Auslenkungswerte und deren Indizes $k_{c,l}$ mit $0 \leq l \leq L$ gefunden. Die kritischen Auslenkungswerte dienen dazu, eine Optimierung der Dämpfungsfaktoren mit zufälligen Startwerten zu vermeiden, was den Algorithmus beschleunigt.

Im Folgenden kann unter einem Look-Back-Headroom 180a ein erster maximaler Auslenkungsanteil verstanden werden. Es beginnt nun eine Verarbeitungsschleife mit $L$ Iterationen. Dabei wird zunächst z. B. für den $l$-ten kritischen Auslenkungswert mit dem Index $k_{c,l}$ der Look-Back-Headroom berechnet, also wie groß die Gesamtdämpfung des aktuellen Blocks $i$ mindestens sein sollte, damit die Überlappung mit dem vorhergehenden, bereits verarbeiteten Block $i$ - 1 nicht zu einem Überschreiten des Grenzwerts $X_{\text{max}}$ führt. Der Look-Back-Headroom für den $l$-ten kritischen Auslenkungswert $h_{b,l}$ berechnet sich z. B. durch

$$h_{\text{b},l} = \frac{\text{sign}\big(X_{\text{i}}[k_{c,l}]\big)X_{\text{max}} - X_{\text{alt}}\big[k_{c,l}\big]}{X_{\text{max}}}$$

Ein finaler Headroom $h_l$, 184 für den $l$-ten kritischen Auslenkungswert berechnet sich z. B. zu

$$h_l = \text{sign}\big(X_{\text{i}}[k_{c,l}]\big)\text{min}\big(\big|h_{\text{b},l}\big|, |h_{\text{a}}|\big).$$

Gemäß einem Ausführungsbeispiel kann die Vorrichtung somit konfiguriert sein, um einen Pegel ($h_l X_{\text{max}}$) basierend auf dem ersten maximalen Auslenkungsanteil ($h_{b,l}$) zu berechnen, wenn der erste maximale Auslenkungsanteil ($h_{b,l}$) kleiner ist als der zweite maximale Auslenkungsanteil ($h_a$) oder den Pegel ($h_l X_{\text{max}}$) basierend auf dem zweiten maximalen Auslenkungsanteil ($h_a$) zu berechnen, wenn der zweite maximalen Auslenkungsanteil ($h_a$) kleiner ist als der erste maximale Auslenkungsanteil ($h_{b,l}$).

Fig. 4 zeigt z. B. die Signalanalyse 150 aus Fig. 3 im Detail.

Gemäß Fig. 3 kann für jedes der $N$ Frequenzbänder dann z. B. jeweils ein linearer Dämpfungsfaktor $g_0$ bis $g_N$ mittels der Dämpfungsfaktorenermittlung 153a berechnet werden (linear heißt hier z. B., dass im jeweiligen Signalblock keine zusätzlichen Nichtlinearitäten eingeführt werden, was bei einem Kompressor der Fall wäre). Die Auslenkung in jedem Frequenzband wird dabei gemäß einem Ausführungsbeispiel mit einem psychoakustischen Modell 190 gewichtet, wodurch die Klangqualität und die Lautheit möglichst hoch bleiben soll. Das psychoakustische Modell 190 besteht in einer einfachen Variante z. B. aus der A-Bewertung nach DIN EN 61672-1 2003-10, kann aber auch eine nichtlineare Implementierung der Kurven gleicher Lautheit oder ein noch komplexeres Modell darstellen (z. B. Maskierung im Zeit- und Frequenzbereich). Alle hierin aufgeführten Aufzählungen der psychoakustischen Modelle sind hierbei als beispielhaft und nicht als abschließend anzusehen.

Auf diese Weise werden nun z. B. alle $L$ kritischen Auslenkungswerte abgearbeitet, bis z. B. eine optimale Reduktion der maximalen Gesamtauslenkung erreicht wird. Kann die Gesamtauslenkung auf Basis der kritischen Auslenkungswerte nicht unter den Grenzwert $h_l X_{max}$ gedrückt werden, kann ggf. eine LMS-Optimierung mit den bis dahin besten Dämpfungsfaktoren als Startwerte eingesetzt werden, um adäquate Dämpfungsfaktoren zu finden.

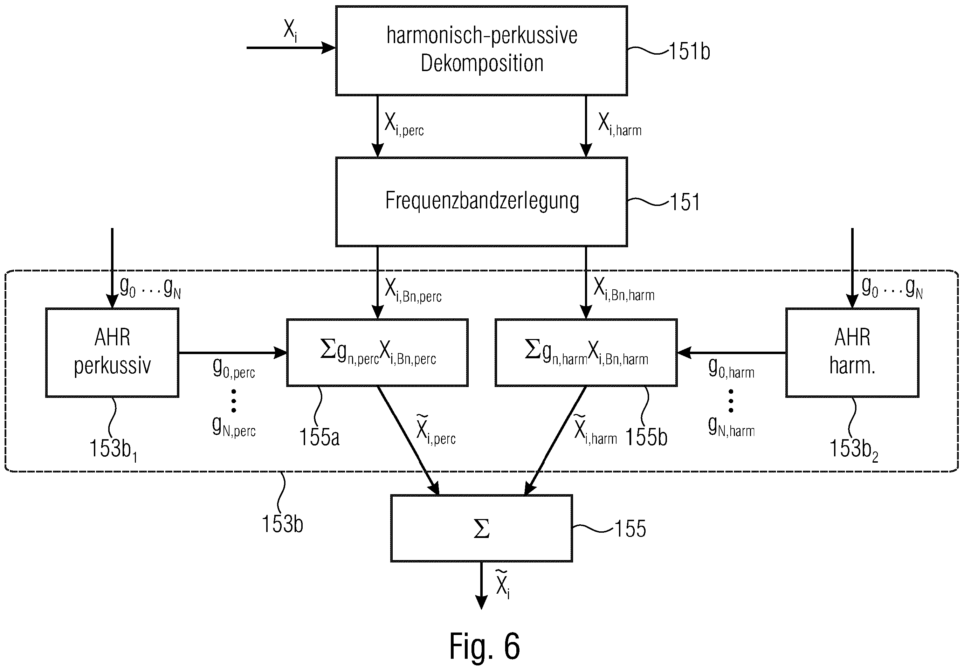

Stehen die Dämpfungsfaktoren für den aktuellen Membranauslenkungssignalbock $X_i$ fest, werden sie z. B. über Attack-, Hold- und Release-Funktionen (AHR) 153b geregelt, die wiederum in den einzelnen Frequenzbändern unabhängig voneinander sein können. An dieser Stelle können zudem unterschiedliche AHR-Funktionen (z. B. eine perkussive AHR $153b_1$ und eine harmonische AHR $153b_2$) auf den perkussiven Signalanteil und den harmonischen Signalanteil angewandt werden, was die Klangqualität weiter verbessern kann (kürzere Zeitkonstanten eignen sich z. B. für perkussive Signale, längere z. B. für harmonische Signale). Hierfür sollte das Signal $X_j$ zuvor durch eine harmonisch-perkussive Dekomposition 151b in die entsprechenden Anteile aufgeteilt und danach durch die Filterbank verarbeitet werden (Frequenzbandzerlegung 151). Fig. 6 stellt diesen Vorgang schematisch dar.

Fig. 6 zeigt unterschiedliche Attack-, Hold- und Release-Funktionen $153b_1$, $153b_2$ für perkussive und harmonische Signalanteile, die ein Detail der Attack-, Hold- und Release-Funktionen 153b aus Fig. 3 sein können. Gemäß einem Ausführungsbeispiel kann die Dämpfungsfaktorenermittlung 153 aus Fig. 1 dieselben Merkmale und Funktionalitäten, wie die unterschiedlichen Attack-, Hold- und Release-Funktionen $153b_1$, $153b_2$ aufweisen.

Die Dämpfungsfaktoren $g_0$ bis $g_N$ können sowohl die perkussive AHR 153b, als auch die harmonische AHR $153b_2$ von der Dämpfungsfaktorenermittlung 153a (dargestellt in Fig. 3) erhalten und anpassen.

Die Attack-, Hold- und Release-Funktionen (AHR) 153b könne sowohl die perkussive AHR 153b, als auch die harmonische AHR $153b_2$, wie auch eine Synthese eines perkussiven 155a und harmonischen 155b modifizierten Membranauslenkungssignals des aktuellen Zeitblocks aufweisen, aber es ist auch möglich, dass die Attack-, Hold- und Release-Funktionen (AHR) 153b nur die perkussive AHR 153b, und die harmonische AHR $153b_2$ aufweisen und die Verrechnungseinrichtung 155 aus Fig. 1, oder Fig. 3 die Synthese eines perkussiven 155a und harmonischen 155b modifizierten Membranauslenkungssignals des aktuellen Zeitblocks, als auch die Aufsummierung 155 des perkussiven 155a und harmonischen 155b modifizierten Membranauslenkungssignals des aktuellen Zeitblocks aus Fig. 6 aufweist. In anderen Worten können in 155a und 155b die Frequenzbänder bereits separat für einen perkussiven 155a und harmonischen 155b Membranauslenkungssignalanteil aufsummiert werden. Die Aufsummierung 155 in Fig. 6 summiert dann die beiden Membranauslenkungssignalanteil auf.

## Signalsynthese

Das perkussive 155a und das harmonische 155b modifizierte Membranauslenkungssignal des aktuellen Zeitblocks wird danach z. B. aufsummiert 155 und aus der begrenzten Auslenkung $\tilde{X}_i$ (z. B. dem modifizierten aktuellen Membranauslenkungssignal) wird z. B. mit Hilfe eines inversen nichtlinearen Auslenkungsmodells 175 die Spannung berechnet, die dem Lautsprecher 200 zugeführt werden muss, um die gewünschte Auslenkung hervorzurufen. Dieses inverse Modell kann auch als einfaches Filter, physikalisches Strukturmodell oder Machine-Learning-Modell ausgeführt sein. Alle hierin aufgeführten Aufzählungen für inverse Modelle sind hierbei als beispielhaft und nicht als abschließend anzusehen. Die Aufsummierung 155, sowie die perkussiven 155a und harmonischen 155b modifizierten Membranauslenkungssignale des aktuellen Zeitblocks aus Fig. 6 können Merkmale und Funktionalitäten der Verrechnungseinrichtung 155 aus Fig. 1, und Fig. 3 aufweisen, und/oder die Verrechnungseinrichtung 155 aus Fig. 1, und Fig. 3 kann Merkmale und Funktionalitäten der Aufsummierung 155, sowie der perkussiven 155a und harmonischen 155b modifizierten Membranauslenkungssignals des aktuellen Zeitblocks aus Fig. 6 aufweisen.

Das Vergleichsbeispiel und seine Implementierung umfassen komplexe Prozesse, die gemäß den nachfolgend beschriebenen Ausführungsbeispielen reduziert werden.

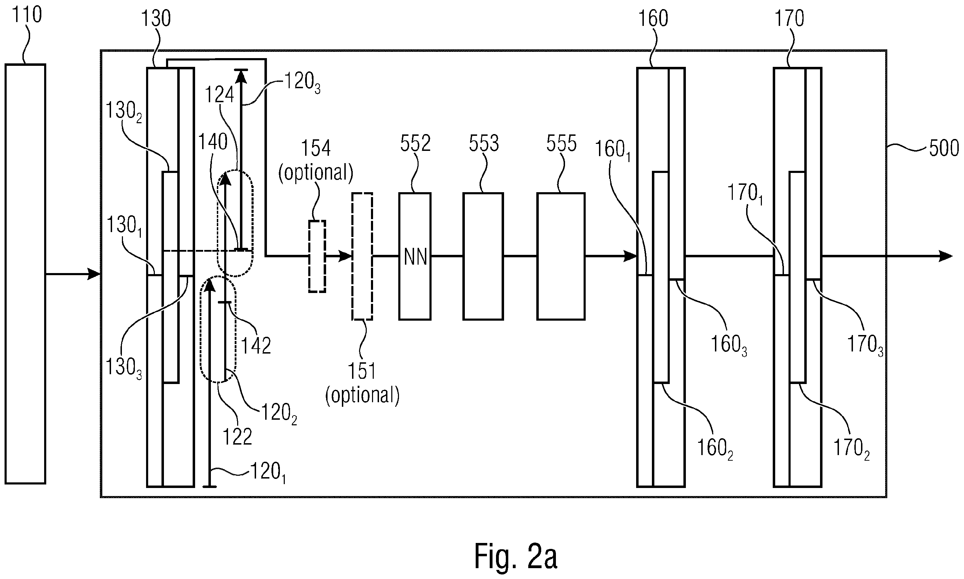

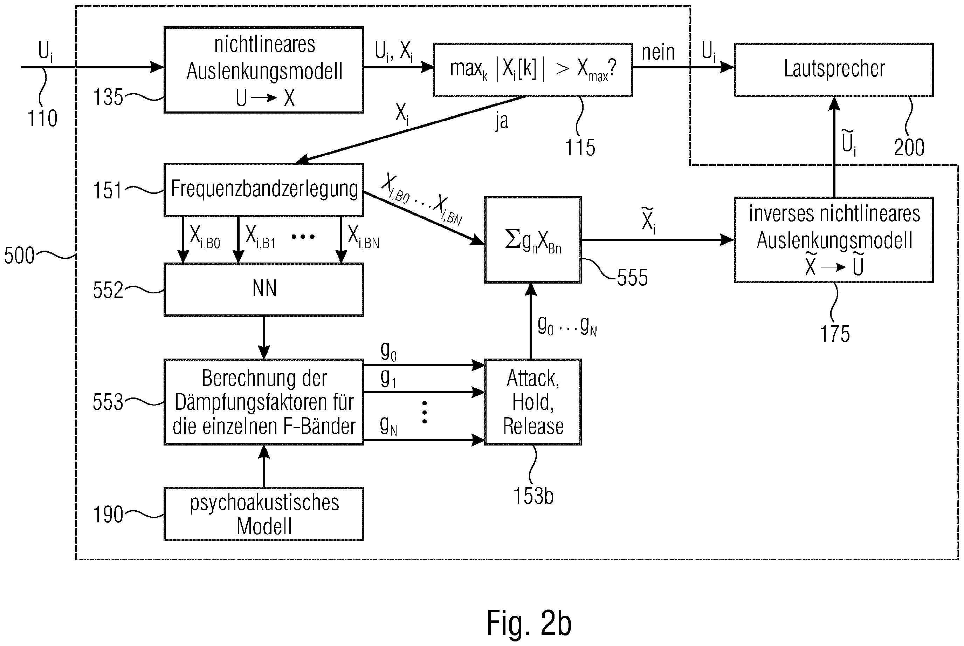

Fig. 2a and 2b zeigen eine alternative Vorrichtung 500 zu Fig. 1 und 3, bei der anders als bei Fig. 1 und 3 die Ermittlungen der zeitlichen Auswerteposition 140 - wenn keine Frequenzbandzerlegung durchgeführt wird - und/oder die Ermittlung der zeitlichen Auswertepositionen 142 - wenn eine Frequenzbandzerlegung durchgeführt wird - dadurch erfolgt, dass der aktuelle Membranauslenkungssignalblock $X_i[k_0]$ bzw. $130_2$ oder dessen Frequenzbandsignalzeitblöcke $X_{i,B\#}$ in dem Block 552 einer Inferenz durch ein Auswertungszeitposition-Inferenz-Machine-Learning-Modell, wie zum Beispiel einem neuronalen Netz (NN), zugeführt wird/werden, wobei das Modell entsprechend so trainiert worden ist, dass anschließend die dort ermittelte Dämpfung optimal ist, wie z.B. optimal im Sinne einer gemäß dem menschlichen Hörvermögen qualitativ möglichst guten und möglichst lauten Reproduktion des dem synthetisierten Lautsprechersignals entsprechenden Audiosignals bei Vermeidung einer Membranüberauslenkung. Die Dämpfungsfaktorermittlung 553 verwendet dann die bestimmten Auswertezeitpunkte wie oben beschrieben zur Bestimmung eines Dämpfungsfaktors, der dann über das Modul 555 auf den aktuellen Membranauslenkungssignalblock angewendet wird, um den entsprechenden modifizierten aktuellen Membranauslenkungssignalblock $\tilde{X}_i$ bzw. $160_2$ zu erhalten. In dem Fall der Frequenzband-weisen Verarbeitung durch den optional vorhandenen Block 151 arbeiten auch die Dämpfungsfaktorberechnung- und Dämpfungsfaktoranwendungsblöcke 553 und 555 Frequenzband-weise. Die Membranauslenkungssignalaufspaltung 154 kann optional auch im Einsatz sein. Man erkennt ohne Weiteres, dass die Signalverarbeitung ggb. Fig. 1 und 3 deutlich vereinfacht wurde. Das Dämpfungsfaktoranwendungsmodul 555 könnte so wie in Fig. 6 dargestellt ausgeführt sein. Alternativ zu der Zuführung des Membranauslenkungssignalblocks $X_i[k_0]$ bzw. $130_2$ oder dessen Frequenzbandsignalzeitblöcke $X_{i,B\#}$ zu dem ML-Modul, könnte letzteres Modell auch ausgebildet sein, auf Basis des Lautsprechsignals 110 bzw. $U_i$ direkt zu arbeiten.

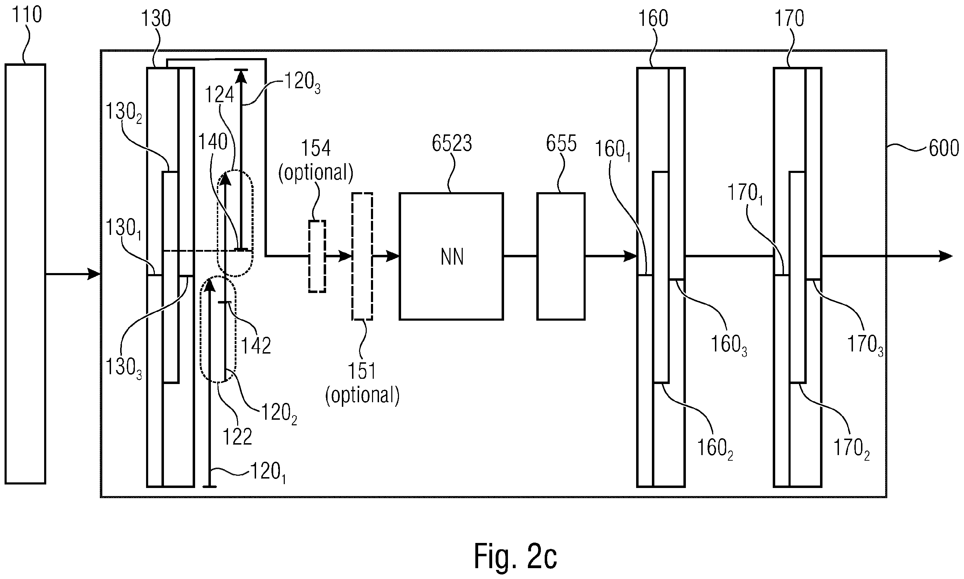

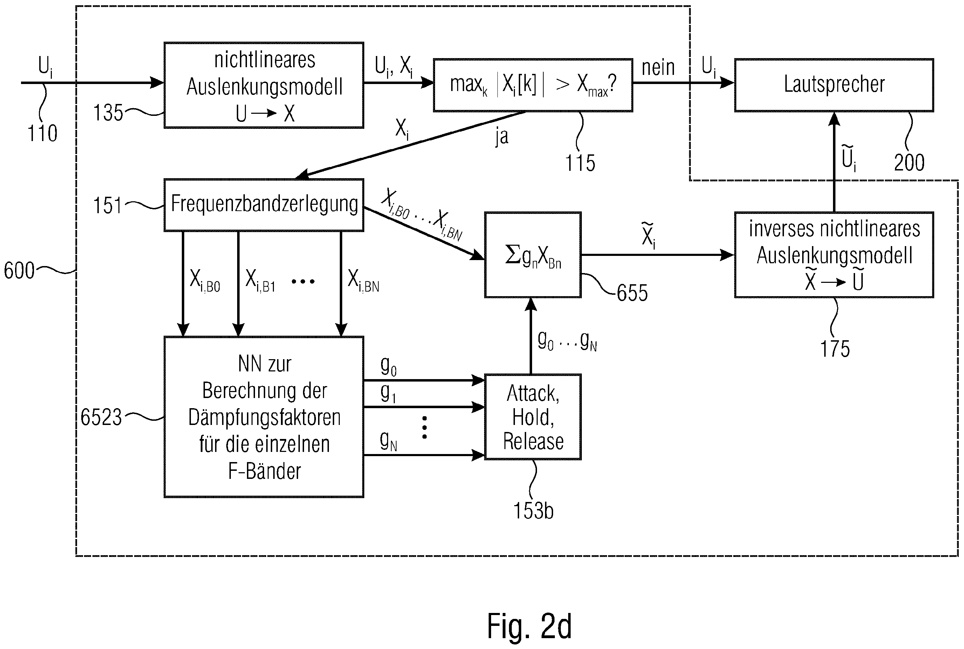

Fig. 2c and 2d zeigen eine alternative Vorrichtung 600 zu Fig. 1 und 3, bei der anders als bei Fig. 1 und 3 keine Ermittlung von zeitlicher Auswerteposition 140 und keine Ermittlung von zeitlichen Auswertepositionen 142 erfolgt, sondern dadurch, dass der aktuelle Membranauslenkungssignalblock $X_i[k_0]$ bzw. $130_2$ oder dessen Frequenzbandsignalzeitblöcke $X_{i,B\#}$ in dem Block 6523 einer Inferenz durch ein Auswertungszeitposition-Inferenz-Machine-Learning-Modell, wie zum Beispiel einem neuronalen Netz (NN), zugeführt wird/werden, Dämpfungsfaktor - frequenzglobal oder Frequenzband-spezifisch - bestimmt wird, wobei das Modell entsprechend so trainiert worden ist, dass die so ermittelte Dämpfung optimal ist, wie z.B. optimal im Sinne einer gemäß dem menschlichen Hörvermögen qualitativ möglichst guten und möglichst lauten Reproduktion des dem synthetisierten Lautsprechersignals entsprechenden Audiosignals bei Vermeidung einer Membranüberauslenkung. Anhand der Hörschwelle werden beispielsweise die Dämpfungsfaktoren, also die Ground Truth für das ML, berechnet. Die Hörschwelle würde dann demnach nur zum Trainieren des ML Modells verwendet werden und kommt in Fig. 2d nicht mehr vor. Der Dämpfungsfaktor wird dann über das Modul 655 auf den aktuellen Membranauslenkungssignalblock angewendet wird, um den entsprechenden modifizierten aktuellen Membranauslenkungssignalblock $\tilde{X}_i$ bzw. $160_2$ zu erhalten. In dem Fall der Frequenzband-weisen Verarbeitung durch den optional vorhandenen Block 151 arbeitet auch der Dämpfungsfaktoranwendungsblock 655 Frequenzband-weise. Die Membranauslenkungssignalaufspaltung 154 kann optional auch im Einsatz sein. Man erkennt ohne Weiteres, dass die Signalverarbeitung ggb. Fig. 1 und 3 deutlich vereinfacht wurde. Alternativ zu der Zuführung des Membranauslenkungssignalblocks $X_i[k_0]$ bzw. $130_2$ oder dessen Frequenzbandsignalzeitblöcke $X_{i,B\#}$ zu dem ML-Modul, könnte letzteres Modell auch ausgebildet sein, auf Basis des Lautsprechsignals 110 bzw. $U_i$ direkt zu arbeiten.

Die Ausführungsbeispiele ermöglichen somit, eine Membranüberauslenkung eines Lautsprechers zu vermeiden. Wie bei dem Vergleichsbeispiel beschrieben basiert das grundliegende Konzept darin, eine vergleichsbasierte Dämpfung überlappender Membranauslenkungssignalblöcke zu realisieren, die einen Overlap-add berücksichtigt. Dafür wird beispielsweise ein Pegel bestimmt, bis zu dem der Membranauslenkungssignalblock ausgesteuert werden kann, um den aktuellen Membranauslenkungssignalblock im Vergleich zu dem nachfolgenden Membranauslenkungssignalblock in einem optimierten Verhältnis zu dämpfen. Dadurch kann der Lautsprecher bei hoher Leistungsfähigkeit betrieben werden, also z. B unter Ausnutzung der komplett möglichen Auslenkung der Membran ohne das Risiko einer Membranüberauslenkung. Allerdings konnte bisher eine optimale Auslenkungsausbeute nicht immer garantiert werden.

Zur Verringerung der Gruppenlaufzeit des Systems ist es möglich, den zukünftigen Membranauslenkungssignalblock anhand der auslaufenden Fensterfunktion des Overlapp-add-Verfahrens zu approximieren, um die Länge eines Signalblocks zu verkürzen (Look Ahead Headroom Prädiktion). Dies kann allerdings in einer nicht optimalen Auslenkungsausbeute resultieren.

Zu einer verbesserten Auslenkungsausbeute könnte man durch ein Berechnen des verfügbaren Headrooms bzw. der jeweiligen Dämpfungsfaktoren über eine Schleife über alle vorhanden Samples des aktuellen Membranauslenkungssignalblocks gelangen. Durch einen stetigen Vergleich mit dem "besten" gefundenen Wert, würde so eine optimale (best case) Auslenkungsausbeute gewährleistet werden können. Dies wird dann allerdings durch einen sehr hohen Rechenaufwand erkauft.

Gemäß obiger Ausführungsbeispiele wird der Rechenaufwand im Betrieb geringer gehalten, indem offline ein Machine-Learning-Modell trainiert wird. Die Ausführungsbeispiele fielen in eine der beiden nachfolgenden grundsätzlichen Varianten:

1. In der ersten Variante werden die optimalen Dämpfungs-Werte aus dem Eingangssignal vorhersagt.
2. in der zweiten Variante werden die Samples bzw. Auswertezeitpunkte bestimmt, anhand derer die optimalen Dämpfungswerte berechnet werden können.

Die Dämpfungswerte können hierbei für verschiedene Frequenzbänder nach einem wahrnehmungsbasierten Modell berechnet werden. Somit wird die effiziente Möglichkeit geboten, einen Lautsprecher vor Überlastung zu schützen, ohne dabei den wahrgenommen Höreindruck zu stören.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (100) zur Modifizierung eines Lautsprechersignals ($U$, $U_i$, $U_{i+1}$, 110) zur Vermeidung einer Membranüberauslenkung, die konfiguriert ist, um

blockweise, in überlappenden Zeitblöcken ($120_1$, $120_2$, $120_3$, i-1, i, i+1), auf Basis des Lautsprechersignals ($U$, $U_i$, $U_{i+1}$, 110) ein Membranauslenkungssignal ($X$, 130) zu prädizieren, um pro Zeitblock ($120_1$, $120_2$, $120_3$, i-1, i, i+1) einen Membranauslenkungssignalblock ($130_1$, $130_2$, $130_3$, $X_{i-1}$, $X_i$, $X_{i+1}$) zu erhalten;

für den aktuellen Zeitblock ($120_2$, i), durch Zuführen eines aktuellen Membranauslenkungssignalblocks ($X_i[k_0]$, $130_2$) oder des Lautsprechersignals in dem aktuellen Zeitblock zu einer Inferenz durch ein Dämpfung-Inferenz-Machine-Learning-Modell einen Dämpfungsfaktor zur Vermeidung einer Membranüberauslenkung unter Berücksichtigung gegenseitiger Membranauslenkungssignalblocküberlappung zu bestimmen; den aktuellen Membranauslenkungssignalblock ($130_2$, $X_i$) mit dem Dämpfungsfaktor zu dämpfen, um einen modifizierten aktuellen Membranauslenkungssignalblock ($\tilde{X}_i$, $160_2$) zu erhalten; und
ein modifiziertes Lautsprechersignal ($\tilde{U}$, 170) auf Basis des modifizierten aktuellen Membranauslenkungssignalblocks ($\tilde{X}_i$, $160_2$) zu synthetisieren.

2. Vorrichtung (100) gemäß Anspruch 1, wobei die Vorrichtung (100) konfiguriert ist, um die Membranauslenkungssignalblocke in Frequenzbandsignalzeitblöcke ($X_{i,B0}$ bis $X_{i,BN}$) zerlegt zu verarbeiten.

3. Vorrichtung (100) gemäß Anspruch 2, wobei die Vorrichtung (100) konfiguriert ist, um für jeden Frequenzbandsignalzeitblock ($X_{i,B0}$ bis $X_{i,BN}$) durch Zuführen des jeweiligen Frequenzbandsignalzeitblocks ($X_i[k_0]$) zu der Inferenz durch das Dämpfung-Inferenz-Machine-Learning-Modell einen Frequenzband-spezifischen Dämpfungsfaktor zu berechnen und mit demselben den jeweiligen Frequenzbandsignalzeitblock zu dämpfen.

4. Vorrichtung (100) gemäß Anspruch 3, wobei die Vorrichtung (100) konfiguriert ist, um für jeden Frequenzbandsignalzeitblock ($X_{i,B0}$ bis $X_{i,BN}$) den Frequenzband-spezifischen Dämpfungsfaktor ($g_0$ bis $g_N$) mit einer Version des Dämpfungsfaktors ($g_0$ bis $g_N$) für einen vorangegangenen Zeitblock, verringert in Dämpfungsstärke durch eine vorbestimmte Abklingfunktion, zu vergleichen und für den aktuellen Zeitblock unter denselben einen gewählten Dämpfungsfaktor ($g_0$ bis $g_N$) zu verwenden, der mit einer höheren Dämpfung verbunden ist.

5. Vorrichtung (100) gemäß Anspruch 4, wobei die Vorrichtung (100) konfiguriert ist, um den aktuellen Membranauslenkungssignalblock ($130_2$, $X_i$) in einen perkussiven Signalanteil ($X_{i,Bn,perc}$; $X_{i,B0,perc}$ bis $X_{i,BN,perc}$) und einen harmonischen Signalanteil ($X_{i,Bn,harm}$; $X_{i,B0,harm}$ bis $X_{i,BN,harm}$) aufzuspalten und die vorbestimmte Abklingfunktion abhängig von dem perkussiven Signalanteil ($X_{i,Bn,perc}$; $X_{i,B0,perc}$ bis $X_{i,BN,perc}$) und/oder dem harmonischen Signalanteil ($X_{i,Bn,harm}$; $X_{i,B0,harm}$ bis $X_{i,BN,harm}$) zu bestimmen.

6. Vorrichtung (100) zur Modifizierung eines Lautsprechersignals (U, $U_i$, $U_{i+1}$, 110) zur Vermeidung einer Membranüberauslenkung, die konfiguriert ist, um

blockweise, in überlappenden Zeitblöcken ($120_1$, $120_2$, $120_3$, i-1, i, i+1), auf Basis des Lautsprechersignals (U, $U_i$, $U_{i+1}$, 110) ein Membranauslenkungssignal (X, 130) zu prädizieren, um pro Zeitblock ($120_1$, $120_2$, $120_3$, i-1, i, i+1) einen Membranauslenkungssignalblock ($130_1$, $130_2$, $130_3$, $X_{i-1}$, $X_i$, $X_{i+1}$) zu erhalten;
eine zeitliche Position (140, $k_0$) innerhalb eines Überlappbereichs ($M_{step}$ bis $M_{block}$, 124) eines aktuellen Zeitblocks ($120_2$, i) mit einem nachfolgenden Zeitblock ($120_3$, i+1) durch Zuführen eines aktuellen Membranauslenkungssignalblocks ($X_i[k_0]$, $130_2$) oder des Lautsprechersignals in dem aktuellen Zeitblock zu einer Inferenz durch ein Auswertungszeitposition-Inferenz-Machine-Learning-Modell zu bestimmen;
für den aktuellen Zeitblock ($120_2$, i) unter Berücksichtigung eines Vergleichs des aktuellen Membranauslenkungssignalblocks ($X_i[k_0]$, $130_2$) mit einem nachfolgenden Membranauslenkungssignalblock ($X_{i+1}[k_0-M_{step}]$, $130_3$) oder einer Schätzung des nachfolgenden Membranauslenkungssignalblocks ($X_{i+1}[k_0-M_{step}]$, $130_3$) aus dem aktuellen Membranauslenkungssignalblock ($130_2$, $X_i$) an der zeitlichen Position ($k_0$, $k_0-M_{step}$, 140) einen Dämpfungsfaktor für den aktuelle Membranauslenkungssignalblock ($130_2$, $X_i$) zu berechnen;
den aktuellen Membranauslenkungssignalblock ($130_2$, $X_i$) mit dem Dämpfungsfaktor zu dämpfen, um einen modifizierten aktuellen Membranauslenkungssignalblock ($\tilde{X}_i$, $160_2$) zu erhalten; und
ein modifiziertes Lautsprechersignal ($\tilde{U}$, 170) auf Basis des modifizierten aktuellen Membranauslenkungssignalblocks ($\tilde{X}_i$, $160_2$) zu synthetisieren.

7. Vorrichtung (100) gemäß Anspruch 6, wobei die Vorrichtung (100) konfiguriert ist, um einen Pegel zu bestimmen, bis zu dem der aktuelle Membranauslenkungssignalblock ausgesteuert werden kann,
wobei
die Vorrichtung (100) konfiguriert ist, um zur Berechnung des Pegels (150a, $h_i X_{max}$) einen Quotienten zwischen dem aktuellen Membranauslenkungssignalblock ($X_i[k_0]$, $130_2$) an der zeitlichen Position ($k_0$, 140) einerseits und einer Summe des nachfolgenden Membranauslenkungssignalblocks ($X_{i+1}[k_0-M_{step}]$, $130_3$) oder der Schätzung des nachfolgenden Membranauslenkungssignalblocks ($X_{i+1}[k_0-M_{step}]$, $130_3$) an der zeitlichen Position ($k_0-M_{step}$, 140) und dem aktuellen Membranauslenkungssignalblock ($X_i[k_0]$, $130_2$) an der zeitlichen Position (140, $k_0$) andererseits zu bestimmen.

8. Vorrichtung (100) gemäß Anspruch 6 oder Anspruch 7, wobei die Vorrichtung (100) konfiguriert ist, um die Membranauslenkungssignalblöcke in Frequenzbandsignalzeitblöcke ($X_{i,B0}$ bis $X_{i,BN}$) zerlegt zu verarbeiten.

9. Vorrichtung (100) gemäß Anspruch 8, wobei die Vorrichtung (100) konfiguriert ist, um für jeden Frequenzbandsignalzeitblock ($X_{i,B0}$ bis $X_{i,BN}$) durch Zuführen des jeweiligen Frequenzbandsignalzeitblocks ($X_i[k_0]$) zu der Inferenz durch das Auswertungszeitposition-Inferenz-Machine-Learning-Modell eine Frequenzband-spezifische zeitliche Position ($k_{c,I}$) zu bestimmen, an derselben unter Berücksichtigung eines Vergleichs des jeweiligen Frequenzbandsignalzeitblocks mit einem entsprechenden Frequenzbandsignalzeitblock des nachfolgenden Membranauslenkungssignalblocks ($X_{i+1}[k_0-M_{step}]$, $130_3$) oder einer Schätzung des nachfolgenden Membranauslenkungssignalblocks ($X_{i+1}[k_0-M_{step}]$, $130_3$) aus dem aktuellen Membranauslenkungssignalblock ($130_2$, $X_i$) einen Frequenzband-spezifischen Dämpfungsfaktor zu berechnen und mit demselben den jeweiligen Frequenzbandsignalzeitblock zu dämpfen.

10. Vorrichtung (100) gemäß Anspruch 9, wobei die Vorrichtung (100) konfiguriert ist, um für jeden Frequenzbandsignalzeitblock ($X_{i,B0}$ bis $X_{i,BN}$) den Frequenzband-spezifischen Dämpfungsfaktor ($g_0$ bis $g_N$) mit einer Version des Dämpfungsfaktors ($g_0$ bis $g_N$) für einen vorangegangenen Zeitblock, verringert in Dämpfungsstärke durch eine vorbestimmte Abklingfunktion, zu vergleichen und für den aktuellen Zeitblock unter denselben einen gewählten Dämpfungsfaktor ($g_0$ bis $g_N$) zu verwenden, der mit einer höheren Dämpfung verbunden ist.

11. Vorrichtung (100) gemäß Anspruch 10, wobei die Vorrichtung (100) konfiguriert ist, um den aktuellen Membranauslenkungssignalblock ($130_2$, $X_i$) in einen perkussiven Signalanteil ($X_{i,Bn,perc}$; $X_{i,B0,perc}$ bis $X_{i,BN,perc}$) und einen harmonischen Signalanteil ($X_{i,Bn,harm}$; $X_{i,B0,harm}$ bis $X_{i,BN,harm}$) aufzuspalten und die vorbestimmte Abklingfunktion abhängig von dem perkussiven Signalanteil ($X_{i,Bn,perc}$; $X_{i,B0,perc}$ bis $X_{i,BN,perc}$) und/oder dem harmonischen Signalanteil ($X_{i,Bn,harm}$; $X_{i,B0,harm}$ bis $X_{i,BN,harm}$) zu bestimmen.

12. Vorrichtung (100) gemäß einem der Ansprüche 1 bis 10, wobei die Vorrichtung (100) konfiguriert ist, um aus dem modifizierten aktuellen Membranauslenkungssignalblock ($\tilde{X}_i$, $160_2$) einen modifizierten aktuellen Lautsprechersignalblock ($170_2$, $\tilde{U}_i$) zu berechnen und einen ersten Teil des modifizierten aktuellen Lautsprechersignalblocks ($170_2$, $\tilde{U}_i$) einem Overlap-Add mit einem modifizierten vorangegangenen Lautsprechersignalblock ($170_1$, $\tilde{U}_{i-1}$) zu unterziehen, um ein modifiziertes Lautsprechersignal ($\tilde{U}$, 170) zu synthetisieren.

13. Verfahren (100) zur Modifizierung eines Lautsprechersignals (U, $U_i$, $U_{i+1}$, 110) zur Vermeidung einer Membranüberauslenkung, umfassend

Blockweises Prädizieren, in überlappenden Zeitblöcken ($120_1$, $120_2$, $120_3$, i-1, i, i+1), auf Basis des Lautsprechersignals (U, $U_i$, $U_{i+1}$, 110), eines Membranauslenkungssignals (X, 130), um pro Zeitblock ($120_1$, $120_2$, $120_3$, i-1, i, i+1) einen Membranauslenkungssignalblock ($130_1$, $130_2$, $130_3$, $X_{i-1}$, $X_i$, $X_{i+1}$) zu erhalten;
für den aktuellen Zeitblock ($120_2$, i), Bestimmen eines Dämpfungsfaktors zur Vermeidung einer Membranüberauslenkung unter Berücksichtigung gegenseitiger Membranauslenkungssignalblocküberlappung durch Zuführen eines aktuellen Membranauslenkungssignalblocks ($X_i[k_0]$, $130_2$) oder des Lautsprechersignals in dem aktuellen Zeitblock zu einer Inferenz durch ein Dämpfung-Inferenz-Machine-Learning-Modell;
Dämpfen des aktuellen Membranauslenkungssignalblocks ($130_2$, $X_i$) mit dem Dämpfungsfaktor, um einen modifizierten aktuellen Membranauslenkungssignalblock ($\tilde{X}_i$, $160_2$) zu erhalten; und
Synthetisieren eines modifizierten Lautsprechersignals ($\tilde{U}$, 170) auf Basis des modifizierten aktuellen Membranauslenkungssignalblocks ($\tilde{X}_i$, $160_2$).

14. Verfahren (100) zur Modifizierung eines Lautsprechersignals (U, $U_i$, $U_{i+1}$, 110) zur Vermeidung einer Membranüberauslenkung, umfassend Blockweises Prädizieren, in überlappenden Zeitblöcken ($120_1$, $120_2$, $120_3$, i-1, i, i+1), auf Basis des Lautsprechersignals (U, $U_i$, $U_{i+1}$, 110), eines Membranauslenkungssignals (X, 130), um pro Zeitblock ($120_1$, $120_2$, $120_3$, i-1, i, i+1) einen Membranauslenkungssignalblock ($130_1$, $130_2$, $130_3$, $X_{i-1}$, $X_i$, $X_{i+1}$) zu erhalten;

Bestimmen einer zeitlichen Position (140, $k_0$) innerhalb eines Überlappbereichs ($M_{step}$ bis $M_{block}$, 124) eines aktuellen Zeitblocks ($120_2$, i) mit einem nachfolgenden Zeitblock ($120_3$, i+1) durch Zuführen eines aktuellen Membranauslenkungssignalblocks ($X_i[k_0]$, $130_2$) oder des Lautsprechersignals in dem aktuellen Zeitblock zu einer Inferenz durch ein Auswertungszeitposition-Inferenz-Machine-Learning-Modell;
für den aktuellen Zeitblock ($120_2$, i), Berechnen eines Dämpfungsfaktors für den aktuellen Membranauslenkungssignalblock ($130_2$, $X_i$) unter Berücksichtigung eines Vergleichs des aktuellen Membranauslenkungssignalblocks ($X_i[k_0]$, $130_2$) mit einem nachfolgenden Membranauslenkungssignalblock ($X_{i+1}[k_0-M_{step}]$, $130_3$) oder einer Schätzung des nachfolgenden Membranauslenkungssignalblocks ($X_{i+1}[k_0-M_{step}]$, $130_3$) aus dem aktuellen

Membranauslenkungssignalblock ($130_2$, $X_i$) an der zeitlichen Position ($k_0$, $k_0$-$M_{step}$, 140);

Dämpfen des aktuellen Membranauslenkungssignalblocks ($130_2$, $X_i$) mit dem Dämpfungsfaktor, um einen modifizierten aktuellen Membranauslenkungssignalblock ($\tilde{X}_i$, $160_2$) zu erhalten; und

Synthetisieren eines modifizierten Lautsprechersignals ($\tilde{U}$, 170) auf Basis des modifizierten aktuellen Membranauslenkungssignalblocks ($\tilde{X}_i$, $160_2$).

15. Computerprogramm mit einem Programmcode zur Durchführung eines Verfahrens nach Anspruch 13 oder Anspruch 14, wenn das Programm auf einem Computer abläuft.

**Claims**

1. An apparatus (100) for modifying a loudspeaker signal (U, $U_i$, $U_{i+1}$, 110) for preventing diaphragm over-deflection, configured to

   predict a diaphragm deflection signal (X, 130), block-by-block, in overlapping time blocks ($120_1$, $120_2$, $120_3$, i-1, i, i+1), on the basis of the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);

   determine, for the current time block ($120_2$, i), by subjecting a current diaphragm deflection signal block ($X_i[k_0]$, $130_2$) or the loudspeaker signal in the current time block to an inference by an attenuation inference machine learning model, an attenuation factor for preventing diaphragm over-deflection while taking into account mutual diaphragm deflection signal block overlap;

   attenuate the current diaphragm deflection signal block ($130_2$, $X_i$) with the attenuation factor to obtain a modified current diaphragm deflection signal block ($\tilde{X}_i$, $160_2$); and

   synthesize a modified loudspeaker signal ($\tilde{U}$, 170) on the basis of the modified current diaphragm deflection signal block ($\tilde{X}_i$, $160_2$).

2. The apparatus (100) as claimed in claim 1, the apparatus (100) being configured to process the diaphragm deflection signal blocks in a manner in which they are decomposed into frequency band signal time blocks ($X_{i,B0}$ to $X_{i,BN}$).

3. The apparatus (100) as claimed in claim 2, the apparatus (100) being configured to calculate, for each frequency band signal time block ($X_{i,B0}$ to $X_{i,BN}$), a frequency band-specific attenuation factor by subjecting the respective frequency band signal time block ($X_i[k_0]$) to the inference by the attenuation inference machine learning model, and to attenuate the respective frequency band signal time block with same.

4. The apparatus (100) as claimed in claim 3, the apparatus (100) being configured to compare, for each frequency band signal time block ($X_{i,B0}$ to $X_{i,BN}$), the frequency band-specific attenuation factor ($g_0$ to $g_N$) with a version of the attenuation factor ($g_0$ to $g_N$) for a previous time block, reduced in attenuation strength by a predetermined fading-away function, and to use, for the current time block among same, a selected attenuation factor ($g_0$ to $g_N$) associated with a higher attenuation.

5. The apparatus (100) as claimed in claim 4, the apparatus (100) being configured to divide the current diaphragm deflection signal block ($130_2$, $X_i$) into a percussive signal portion ($X_{i,Bn,perc}$; $X_{i,B0,perc}$ to $X_{i,BN,perc}$) and a harmonic signal portion ($X_{i,Bn,harm}$; $X_{i,B0,harm}$ to $X_{i,BN,harm}$) and to determine the predetermined fading-away function in dependence on the percussive signal portion ($X_{i,Bn,perc}$; $X_{i,B0,perc}$ to $X_{i,BN,perc}$) and/or the harmonic signal portion ($X_{i,Bn,harm}$; $X_{i,B0,harm}$ to $X_{i,BN,harm}$).

6. An apparatus (100) for modifying a loudspeaker signal (U, $U_i$, $U_{i+1}$, 110) to prevent diaphragm over-deflection, configured to

   predict, block by block, in overlapping time blocks ($120_1$, $120_2$, $120_3$, i-1, i, i+1), a diaphragm deflection signal (X, 130) on the basis of the loudspeaker signal (U, $U_i$, $U_{i+1}$, 110) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);

   determine a temporal position (140, $k_0$) within an overlap area ($M_{step}$ to $M_{block}$, 124) of a current time block ($120_2$, i) with a subsequent time block ($120_3$, i+1) by subjecting a current diaphragm deflection signal block ($X_i[k_0]$, $130_2$) or the loudspeaker signal in the current time block to an inference by an evaluation temporal position inference machine learning model;

   calculate, for the current time block ($120_2$, i), an attenuation factor for the current diaphragm deflection signal

block ($130_2$, $X_i$) while taking into account a comparison of the current diaphragm deflection signal block ($X_i[k_0]$, $130_2$) with a subsequent diaphragm deflection signal block ($X_{i+1}[k_0\text{-}M_{step}]$, $130_3$) or an estimate of the subsequent diaphragm deflection signal block ($X_{i+1}[k_0\text{-}M_{step}]$, $130_3$) from the current diaphragm deflection signal block ($130_2$, $X_i$) at the temporal position ($k_0$, $k_0\text{-}M_{step}$, 140);

attenuate the current diaphragm deflection signal block ($130_2$, $X_i$) with the attenuation factor to obtain a modified current diaphragm deflection signal block ($\tilde{X}_i$, $160_2$); and

synthesize a modified loudspeaker signal ($\tilde{U}$, 170) on the basis of the modified current diaphragm deflection signal block ($\tilde{X}_i$, $160_2$).

7. The apparatus (100) as claimed in claim 6, wherein the apparatus (100) is configured to determine a level up to which the current diaphragm deflection signal block can be controlled,
wherein the apparatus (100) is configured to determine, to calculate the level (150a, $h_l X_{max}$), a quotient between the current diaphragm deflection signal block ($X_i[k_0]$, $130_2$) at the temporal position ($k_0$, 140), on the one hand, and a sum of the subsequent diaphragm deflection signal block ($X_{i+1}[k_0\text{-}M_{step}]$, $130_3$) or of the estimation of the subsequent diaphragm deflection signal block ($X_{i+1}[k_0\text{-}M_{step}]$, $130_3$) at the temporal position ($k_0\text{-}M_{step}$, 140) and the current diaphragm deflection signal block ($X_i[k_0]$, $130_2$) at the temporal position (140, $k_0$), on the other hand.

8. The apparatus (100) as claimed in claim 6 or claim 7, the apparatus (100) being configured to process the diaphragm deflection signal blocks in a manner in which they are decomposed into frequency band signal time blocks ($X_{i,B0}$ to $X_{i,BN}$).

9. The apparatus (100) as claimed in claim 8, the apparatus (100) being configured to determine, for each frequency band signal time block ($X_{i,B0}$ to $X_{i,BN}$), a frequency band-specific temporal position ($k_{c,l}$) by subjecting the respective frequency band signal time block ($X_i[k_0]$) to the inference by the evaluation temporal position inference machine learning model, to calculate thereat, while taking into account a comparison of the respective frequency band signal time block with a corresponding frequency band signal time block of the subsequent diaphragm deflection signal block ($X_{i+1}[k_0\text{-}M_{step}]$, $130_3$) or an estimation of the subsequent diaphragm deflection signal block ($X_{i+1}[k_0\text{-}M_{step}]$, $130_3$), a frequency band-specific attenuation factor from the current diaphragm deflection signal block ($130_2$, $X_i$), and to attenuate the respective frequency band signal time block with the former.

10. The apparatus (100) as claimed in claim 9, the apparatus (100) being configured to compare, for each frequency band signal time block ($X_{i,B0}$ to $X_{i,BN}$), the frequency band-specific attenuation factor ($g_0$ to $g_N$) with a version of the attenuation factor ($g_0$ to $g_N$) for a previous time block, reduced in attenuation strength by a predetermined fading-away function, and to use, for the current time block among same, a selected attenuation factor ($g_0$ to $g_N$) associated with a higher attenuation.

11. The apparatus (100) as claimed in claim 10, the apparatus (100) being configured to split the current diaphragm deflection signal block ($130_2$, $X_i$) into a percussive signal portion ($X_{i,Bn,perc}$; $X_{i,B0,perc}$ to $X_{i,BN,perc}$) and a harmonic signal portion ($X_{i,Bn,harm}$; $X_{i,B0,harm}$ to $X_{i,BN,harm}$) and to determine the predetermined fading-away function in dependence on the percussive signal portion ($X_{i,Bn,perc}$; $X_{i,B0,perc}$ to $X_{i,BN,perc}$) and/or the harmonic signal portion ($X_{i,Bn,harm}$; $X_{i,B0,harm}$ to $X_{i,BN,harm}$).

12. The apparatus (100) as claimed in any of claims 1 to 10, the apparatus (100) being configured to calculate a modified current loudspeaker signal block ($170_2$, $\tilde{U}_i$) from the modified current diaphragm deflection signal block ($\tilde{X}_i$, $160_2$) and to subject a first part of the modified current loudspeaker signal block ($170_2$, $\tilde{U}_i$) to an overlap-add with a modified preceding loudspeaker signal block ($170_1$, $\tilde{U}_{i-1}$) to synthesize a modified loudspeaker signal ($\tilde{U}$, 170).

13. A method (100) of modifying a loudspeaker signal (U, $U_i$, $U_{i+1}$, 110) to prevent diaphragm over-deflection, comprising

predicting, block by block, in overlapping time blocks ($120_1$, $120_2$, $120_3$, i-1, i, i+1), on the basis of the loudspeaker signal (U, $U_i$, $U_{i+1}$, 110), a diaphragm deflection signal (X, 130) in order to obtain, per time block ($120_1$, $120_2$, $120_3$, i-1, i, i+1), a diaphragm deflection signal block ($130_1$, $130_2$, $130_3$, $X_{i-1}$, $X_i$, $X_{i+1}$);

determining, for the current time block ($120_2$, i), an attenuation factor for preventing diaphragm over-deflection while taking into account mutual diaphragm deflection signal block overlap by subjecting a current diaphragm deflection signal block ($X_i[k_0]$, $130_2$) or the loudspeaker signal in the current time block to an inference by an attenuation inference machine learning model;

attenuating the current diaphragm deflection signal block ($130_2$, $X_i$) with the attenuation factor to obtain a modified current diaphragm deflection signal block ($\tilde{X}_i$, $160_2$); and

synthesizing a modified loudspeaker signal ($\tilde{U}$, 170) on the basis of the modified current diaphragm deflection signal block ($\tilde{X}_i$, $160_2$).

14. A method (100) of modifying a loudspeaker signal (U, $U_i$, $U_{i+1}$, 110) to prevent diaphragm over-deflection, comprising

predicting, block by block, in overlapping time blocks ($120_1$, $120_2$, $120_3$, i-1, i, i+1), on the basis of the loudspeaker signal (U, $U_i$, $U_{i+1}$, 110), a diaphragm deflection signal (X, 130) to obtain one diaphragm deflection signal block ($130_1$, $130_2$, $130_3$, $X_{i-1}$, $X_i$, $X_{i+1}$) per time block ($120_1$, $120_2$, $120_3$, i-1, i, i+1);

determining a temporal position (140, $k_0$) within an overlap area ($M_{step}$ to $M_{block}$, 124) of a current time block ($120_2$, i) with a subsequent time block ($120_3$, i+1) by subjecting a current diaphragm deflection signal block ($X_i[k_0]$, $130_2$) or the loudspeaker signal in the current time block to an inference by an evaluation temporal position inference machine learning model;

for the current time block ($120_2$, i), calculating an attenuation factor for the current diaphragm deflection signal block ($130_2$, $X_i$) while taking into account a comparison of the current diaphragm deflection signal block ($X_i[k_0]$, $130_2$) with a subsequent diaphragm deflection signal block ($X_{i+1}[k_0-M_{step}]$, $130_3$) or an estimation of the subsequent diaphragm deflection signal block ($X_{i+1}[k_0-M_{step}]$, $130_3$) from the current diaphragm deflection signal block ($130_2$, $X_i$) at the temporal position ($k_0$, $k_0-M_{step}$, 140);

attenuating the current diaphragm deflection signal block ($130_2$, $X_i$) with the attenuation factor to obtain a modified current diaphragm deflection signal block ($\tilde{X}_i$, $160_2$); and

synthesizing a modified loudspeaker signal ($\tilde{U}$, 170) on the basis of the modified current diaphragm deflection signal block ($\tilde{X}_i$, $160_2$).

15. A computer program having a program code for performing a method of claim 13 or claim 14, when the program runs on a computer.


**Revendications**

1. Dispositif (100) permettant de modifier un signal de haut-parleur (U, $U_i$, $U_{i+1}$, 110) pour éviter une déviation excessive de la membrane, qui est configuré pour

prédire par bloc, dans des blocs temporels qui se chevauchent ($120_1$, $120_2$, $120_3$, i-1, i, i+1), sur base du signal de haut-parleur (U, $U_i$, $U_{i+1}$, 110), un signal de déviation de membrane (X, 130) pour obtenir, par bloc temporel ($120_1$, $120_2$, $120_3$, i-1, i, i+1), un bloc de signaux de déviation de membrane ($130_1$, $130_2$, $130_3$, $X_{i-1}$, $X_i$, $X_{i+1}$);

déterminer, pour le bloc temporel actuel ($120_2$, i), en alimentant un bloc de signaux de déviation de membrane actuel ($X_i[k_0]$, $130_2$) ou le signal de haut-parleur dans le bloc temporel actuel vers une inférence par un modèle d'apprentissage par machine d'inférence d'atténuation, un facteur d'atténuation pour éviter une déviation excessive de la membrane, en tenant compte du chevauchement de blocs de signaux de déviation de membrane;

atténuer le bloc de signaux de déviation de membrane actuel ($130_2$, $X_i$) par le facteur d'atténuation pour obtenir un bloc de signaux de déviation de membrane actuel modifié ($\tilde{X}_i$ $160_2$); et

synthétiser un signal de haut-parleur modifié ($\tilde{U}$, 170) sur base du bloc de signaux de déviation de membrane actuel modifié ($\tilde{X}_i$ $160_2$).

2. Dispositif (100) selon la revendication 1, dans lequel le dispositif (100) est configuré pour traiter les blocs de signaux de déviation de membrane décomposés en blocs temporels de signaux de bande de fréquences ($X_{i,B0}$ à $X_{i,BN}$).

3. Dispositif (100) selon la revendication 2, dans lequel le dispositif (100) est configuré pour calculer, pour chaque bloc temporel de signaux de bande de fréquences ($\tilde{X}_{i,\,B0}$ à $X_{i,\,BN}$), en alimentant le bloc temporel de signaux de bande de fréquences respectif ($X_i[k_0]$) vers l'inférence par le modèle d'apprentissage par machine d'inférence d'atténuation, un facteur d'atténuation spécifique à la bande de fréquences et pour atténuer par ce dernier le bloc temporel de signaux de bande de fréquences respectif.

4. Dispositif (100) selon la revendication 3, dans lequel le dispositif (100) est configuré pour comparer, pour chaque bloc temporel de signaux de bande de fréquences ($X_{i,\,B0}$ à $X_{i,\,BN}$), le facteur d'atténuation spécifique à la bande de fréquences ($g_0$ à $g_N$) avec une version du facteur d'atténuation ($g_0$ à $g_N$) pour un bloc temporel précédent réduit en force d'atténuation par une fonction d'atténuation prédéterminée, et pour utiliser, pour le bloc temporel actuel parmi ces derniers, un facteur d'atténuation choisi ($g_0$ à $g_N$) qui est lié à un atténuation plus élevée.

**5.** Dispositif (100) selon la revendication 4, dans lequel le dispositif (100) est configuré pour décomposer le bloc de signaux de déviation de membrane actuel ($130_2$, $X_i$) en une part de signal de percussion ($X_{i,Bn,perc}$; $X_{i,B0,perc}$ à $X_{i,BN,perc}$) et une part de signal harmonique ($X_{i,Bn,harm}$; $X_{i,B0,harm}$ à $X_{i,BN,harm}$) et pour déterminer la fonction d'atténuation prédéterminée en fonction de la part de signal de percussion ($X_{i,Bn,perc}$; $X_{i,B0,perc}$ à $X_{i,BN,perc}$) et/ou de la part de signal harmonique ($X_{i,Bn,harm}$; $X_{i,B0,harm}$ à $X_{i,BN,harm}$).

**6.** Dispositif (100) permettant de modifier un signal de haut-parleur ($U$, $U_i$, $U_{i+1}$, 110) pour éviter une déviation excessive de la membrane, qui est configuré pour

prédire par bloc, dans des blocs temporels qui se chevauchent ($120_1$, $120_2$, $120_3$, i-1, i, i+1), sur base du signal de haut-parleur ($U$, $U_i$, $U_{i+1}$, 110), un signal de déviation de membrane ($X$, 130) pour obtenir, par bloc temporel ($120_1$, $120_2$, $120_3$, i-1, i, i+1), un bloc de signaux de déviation de membrane ($130_1$, $130_2$, $130_3$, $X_{i-1}$, $X_i$, $X_{i+1}$); déterminer une position temporelle (140, $k_0$) dans une zone de chevauchement ($M_{step}$ à $M_{block}$, 124) d'un bloc temporel actuel ($120_2$, i) avec un bloc temporel suivant ($120_3$, i+1) en alimentant un bloc de signaux de déviation de membrane actuel ($X_i[k_0]$, $130_2$) ou le signal de haut-parleur dans le bloc temporel actuel vers une inférence par un modèle d'apprentissage par machine d'inférence de position temporelle d'évaluation; calculer, pour le bloc temporel actuel ($120_2$, i), en tenant compte d'une comparaison du bloc de signaux de déviation de membrane actuel ($X_i[k_0]$, $130_2$) avec un bloc de signaux de déviation de membrane suivant ($X_i[k_0-M_{step}]$, $130_2$) ou une estimation du bloc de signaux de déviation de membrane suivant ($X_i[k_0-M_{step}]$, $130_3$), à partir du bloc de signaux de déviation de membrane actuel ($130_2$, $X_i$) à la position temporelle ($k_0$, $k_0-M_{step}$, 140), un facteur d'atténuation pour le bloc de signaux de déviation de membrane actuel ($130_2$, $X_i$); atténuer le bloc de signaux de déviation de membrane actuel ($130_2$, $X_i$) par le facteur d'atténuation pour obtenir un bloc de signaux de déviation de membrane actuel modifié ($\tilde{X}_i$ $160_2$); et synthétiser un signal de haut-parleur modifié ($\tilde{U}$, 170) sur base du bloc de signaux de déviation de membrane actuel modifié ($\tilde{X}_i$ $160_2$).

**7.** Dispositif (100) selon la revendication 6, dans lequel le dispositif (100) est configuré pour déterminer un niveau jusqu'auquel peut être ajusté le bloc de signaux de déviation de membrane actuel, dans lequel le dispositif (100) est configuré pour déterminer, pour calculer le niveau (150a, $h_1X_{max}$), un quotient entre le bloc de signaux de déviation de membrane actuel ($Xi[k0]$, $130_2$) à la position temporelle ($k0$, 140), d'une part, et une somme du bloc de signaux de déviation de membrane suivant ($Xi+1[k0-Mstep]$, $130_3$) ou l'estimation du bloc de signaux de déviation de membrane suivant ($Xi+1[k0-Mstep]$, $130_3$) à la position temporelle ($k0-Mstep$, 140) et le bloc de signaux de déviation de membrane actuel ($Xi[k0]$, $130_2$) à la position temporelle (140, $k0$), d'autre part.

**8.** Dispositif (100) selon la revendication 6 ou la revendication 7, dans lequel le dispositif (100) est configuré pour traiter les blocs de signaux de déviation de membrane décomposés en blocs temporels de signaux de bande de fréquences ($X_{i, B0}$ à $X_{i, BN}$).

**9.** Dispositif (100) selon la revendication 8, dans lequel le dispositif (100) est configuré pour déterminer, pour chaque bloc temporel de signaux de bande de fréquences ($X_{i, B0}$ à $X_{i, BN}$), en alimentant le bloc temporel de signaux de bande de fréquences respectif ($X_i[k_0]$) vers l'inférence par le modèle d'apprentissage par machine d'inférence de position temporelle d'évaluation, une position temporelle spécifique à la bande de fréquences ($k_{c,l}$), pour calculer à cette dernière, en tenant compte d'une comparaison du bloc temporel de signaux de bande de fréquences respectif avec un bloc temporel de signaux de bande de fréquences correspondant du bloc de signaux de déviation de membrane suivant ($X_{i+1}[k_0-M_{step}]$, $130_3$) ou une estimation du bloc de signaux de déviation de membrane suivant ($X_{i+1}[k_0-M_{step}]$, $130_3$) à partir du bloc de signaux de déviation de membrane actuel ($130_2$, $X_i$), un facteur d'atténuation spécifique à la bande de fréquences et pour atténuer par ce dernier le bloc temporel de signaux de bande de fréquences respectif.

**10.** Dispositif (100) selon la revendication 9, dans lequel le dispositif (100) est configuré pour comparer, pour chaque bloc temporel de signaux de bande de fréquences ($X_{i, B0}$ à $X_{i, BN}$), le facteur d'atténuation spécifique à la bande de fréquences ($g_0$ à $g_N$) avec une version du facteur d'atténuation ($g_0$ à $g_N$) pour un bloc temporel précédent réduit en intensité d'atténuation par une fonction d'atténuation prédéterminée, et pour utiliser pour le bloc temporel actuel parmi ces derniers un facteur d'atténuation choisi ($g_0$ à $g_N$) qui est lié à une atténuation plus élevée.

**11.** Dispositif (100) selon la revendication 10, dans lequel le dispositif (100) est configuré pour décomposer le bloc de signaux de déviation de membrane actuel ($130_2$, $X_i$) en une part de signal de percussion ($X_{i,Bn,perc}$; $X_{i,B0,perc}$ à

$X_{i,BN,perc}$) et une part de signal harmonique ($X_{i,Bn,harm}$; $X_{i,B0,harm}$ à $X_{i,BN,harm}$) et pour déterminer la fonction d'atténuation prédéterminée en fonction de la part de signal de percussion ($X_{i,Bn,perc}$; $X_{i,B0,perc}$ à $X_{i,BN,perc}$) et/ou la part de signal harmonique ($X_{i,Bn,harm}$; $X_{i,B0,harm}$ à $X_{i,BN,harm}$).

12. Dispositif (100) selon l'une des revendications 1 à 10, dans lequel le dispositif (100) est configuré pour calculer à partir du bloc de signaux de déviation de membrane actuel modifié ($\tilde{X}_i$ $160_2$) un bloc de signaux de haut-parleur actuel modifié ($170_2$, $\tilde{U}_i$) et pour soumettre une première partie du bloc de signaux de haut-parleur actuel modifié ($170_2$, $\tilde{U}_i$) à une addition à chevauchement avec un bloc de signaux de haut-parleur précédent modifié ($170_1$, $\tilde{U}_{i-1}$) pour synthétiser un signal de haut-parleur modifié ($\tilde{U}$, 170).

13. Procédé (100) permettant de modifier un signal de haut-parleur (U, $U_i$, $U_{i+1}$, 110) pour éviter une déviation excessive de la membrane, comprenant le fait de

prédire par bloc, dans des blocs temporels qui se chevauchent ($120_1$, $120_2$, $120_3$, i-1, i, i+1), sur base du signal de haut-parleur (U, $U_i$, $U_{i+1}$, 110), un signal de déviation de membrane (X, 130) pour obtenir, par bloc temporel ($120_1$, $120_2$, $120_3$, i-1, i, i+1), un bloc de signaux de déviation de membrane ($130_1$, $130_2$, $130_3$, $X_{i-1}$, $X_i$, $X_{i+1}$);
pour le bloc temporel actuel ($120_2$, i), déterminer un facteur d'atténuation pour éviter une déviation excessive de la membrane en tenant compte du chevauchement de blocs de signaux de déviation de membrane réciproque en alimentant un bloc de signaux de déviation de membrane actuel ($X_i[k_0]$, $130_2$) ou le signal de haut-parleur dans le bloc temporel actuel vers une inférence par un modèle d'apprentissage par machine d'inférence d'atténuation;
atténuer le bloc de signaux de déviation de membrane actuel ($130_2$, $X_i$) par le facteur d'atténuation pour obtenir un bloc de signaux de déviation de membrane actuel modifié ($\tilde{X}_i$ $160_2$); et
synthétiser un signal de haut-parleur modifié ($\tilde{U}$, 170) sur base du bloc de signaux de déviation de membrane actuel modifié ($\tilde{X}_i$ $160_2$).

14. Procédé (100) permettant de modifier un signal de haut-parleur (U, $U_i$, $U_{i+1}$, 110) pour éviter une déviation excessive de la membrane, comprenant le fait de

prédire par bloc, dans des blocs temporels qui se chevauchent ($120_1$, $120_2$, $120_3$, i-1, i, i+1), sur base du signal de haut-parleur (U, $U_i$, $U_{i+1}$, 110), un signal de déviation de membrane (X, 130) pour obtenir, par bloc temporel ($120_1$, $120_2$, $120_3$, i-1, i, i+1), un bloc de signaux de déviation de membrane ($130_1$, $130_2$, $130_3$, $X_{i-1}$, $X_i$, $X_{i+1}$);
déterminer une position temporelle (140, $k_0$) dans une zone de chevauchement ($M_{step}$ à $M_{block}$, 124) d'un bloc temporel actuel ($120_2$, i) avec un bloc temporel suivant ($120_3$, i+1) en alimentant un bloc de signaux de déviation de membrane actuel ($X_i[k_0]$, $130_2$) ou le signal de haut-parleur dans le bloc temporel actuel vers une inférence par un modèle d'apprentissage par machine d'inférence de position temporelle d'évaluation;
pour le bloc temporel actuel ($120_2$, i), calculer un facteur d'atténuation pour le bloc de signaux de déviation de membrane actuel ($130_2$, $X_i$) en tenant compte d'une comparaison du bloc de signaux de déviation de membrane actuel ($X_i[k_0]$, $130_2$) avec un bloc de signaux de déviation de membrane suivant ($X_{i+1}[k_0-M_{step}]$, $130_3$) ou une estimation du bloc de signaux de déviation de membrane suivant ($X_{i+1}[k_0-M_{step}]$, $130_3$) à partir du bloc de signaux de déviation de membrane actuel ($130_2$, $X_i$) à la position temporelle ($k_0$, $k_0-M_{step}$, 140);
atténuer le bloc de signaux de déviation de membrane actuel ($130_2$, $X_i$) par le facteur d'atténuation pour obtenir un bloc de signaux de déviation de membrane actuel modifié ($\tilde{X}_i$ $160_2$); et
synthétiser un signal de haut-parleur modifié ($\tilde{U}$, 170) sur base du bloc de signaux de déviation de membrane actuel modifié ($\tilde{X}_i$ $160_2$).

15. Programme d'ordinateur avec un code de programme pour réaliser un procédé selon la revendication 13 ou la revendication 14 lorsque le programme est exécuté sur un ordinateur.

Fig. 1

EP 4 049 461 B1

Fig. 2a

Fig. 2b

EP 4 049 461 B1

Fig. 2c

EP 4 049 461 B1

Fig. 2d

Fig. 3

EP 4 049 461 B1

Input

$X_{i,B0}$   $X_{i,B1}$   $\cdots$   $X_{i,BN}$   $X_i$   $\tilde{X}_{i-1}$     $X_i$   $\tilde{X}_{i-1}$     $X_i$   $\tilde{X}_{i+1}$

152 — Finde $L \geq 1$ kritische Auslenkungswerte

$k_{c,l}$ → Look-Back-Headroom     Look-Ahead-Headroom

180a    $h_{b,l}$     $h_a$    180b

$k_{c,l}$

min() — 184

$h_l$

Output (zu Berechnung der Dämpfungsfaktoren)

Fig. 4

EP 4 049 461 B1

Fig. 5a

Fig. 5b

Fig. 5c

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4113983 A
- US 4327250 A
- US 5481617 A
- US 20180014121 A1
- US 8855322 B2
- US 9807502 B
- GB 2539725 A